# EUROPEAN PATENT APPLICATION

(11) **EP 2 187 271 A1**
(43) Date of publication of application: **19.05.2010**
(21) Application number: 09013947.8
(22) Date of filing: 06.11.2009
(51) Int. Cl.: G03H 1/02, G02B 5/30, B42D 15/00

(54) **Foil for preventing forgery comprising a birefringent pattern**

(30) Priority: 07.11.2008 JP 2008287071
(71) Applicant: Fujifilm Corporation, Tokyo 106-8620 (JP)
(72) Inventor: Suzuki, Satomi, Kanagawa 250-0193 (JP); Kaneiwa, Hideki, Kanagawa 250-0193 (JP); Amimori, Ichiro, Kanagawa 250-0193 (JP)
(74) Representative: HOFFMANN EITLE

(57) **Abstract**

A forgery-preventing foil having a latent image and a total thickness of 20 µm or less, containing at least one patterned optically anisotropic layer (11,112) having two or more regions (112-A,112-B) different in birefringence property, all of the regions in the same layer being formed of the same layer-forming composition.

## Description

### FIELD OF THE INVENTION

The present invention relates to a forgery-preventing (transfer) foil for distinguishing authentic products from fakes.

### BACKGROUND OF THE INVENTION

Forgery-preventing means is broadly divided into means for making it impossible to copy products themselves and means for attaching an unreproducible label to products as forgery-preventing means so that true and correct products (authentic products) can be identified. Herein, "product" is a generic name of a produced item such as an article, a commodity and goods. In particular, the latter means is frequently used, because it is more generally versatile than the former means, which rather needs to be individually dealt with.

The latter means may be further divided into two techniques. One is a technique in which anyone can always identify the existence of forgery-preventing means, and a well known technique includes a hologram. The other is a technique in which forgery-preventing means is ordinarily undetectable, and only persons who know the existence of forgery-preventing means can detect it with special means to determine whether the product is authentic or not, and known techniques include manifestation ("manifestation" means that a latent image becomes identified by any means, e.g., observation via a polarizing plate) of a latent image by means of polarized light and identification by color shift (see, for example, JP-A-2004-29189 ("JP-A" means unexamined published Japanese patent application) and JP-A-2008-137232). However, such unreproducible labels attached to authentic products may be peeled off therefrom and transferred to fakes.

Such a label may be attached in the form of a transfer foil to authentic products so that it can be less likely to be peeled off or misused (see, for example, JP-A -2001-71698 and JP-A -2008-49550). In such techniques, however, a latent image is formed by printing a pattern of a liquid-crystalline compound, and therefore, it is difficult to make a multicolor latent image, or to satisfy both alignment (orientation) and fine definition.

### SUMMARY OF THE INVENTION

The present invention resides in a forgery-preventing foil having a latent image and a total thickness of 20 µm or less, comprising at least one patterned optically anisotropic layer having two or more regions different in birefringence property, all of the regions in the same layer being formed of the same layer-forming composition.

Further, the present invention resides in a forgery-preventing transfer foil, comprising: a temporary support; and the forgery-preventing foil formed on the temporary support.

Further, the present invention resides in a method for producing the forgery-preventing transfer foil, comprising the sequential steps of:
applying a layer-forming composition containing a reactive group-containing liquid-crystalline compound directly to a temporary support or to a temporary support with any other layer interposed therebetween, to form an optically anisotropic layer;
heating the optically anisotropic layer in a pattern or irradiating the optically anisotropic layer with ionizing radiation in a pattern; and
curing the optically anisotropic layer entirely by ionizing radiation or heat treatment.

Further, the present invention resides in a forgery-prevented product, comprising: a product; and the forgery-preventing transfer foil transferred to at least part of the product.

Other and further features and advantages of the invention will appear more fully from the following description, appropriately referring to the accompanying drawings.

### BRIEF DESCRIPTION OF THE DRAWINGS

Figs. 1(a) to 1(c) are each a cross-sectional view schematically showing the structure of a laminate of an optically anisotropic layer and a functional layer according to an embodiment of the forgery-preventing (transfer) foil of the invention.
Fig. 2 is a cross-sectional view schematically showing the layered structure according to an embodiment of the forgery-preventing transfer foil of the invention.
Figs. 3(a) to 3(d) are each an explanatory drawing showing an example of the birefringent pattern of the forgery-preventing (transfer) foil of the invention in schematic cross-sectional form.
Figs. 4(a) to 4(h) are each a cross-sectional view schematically showing an example of the layered structure of the forgery-preventing transfer foil of the invention.

### DETAILED DESCRIPTION OF THE INVENTION

According to the present invention, there is provided the following means:
(1) A forgery-preventing foil having a latent image and a total thickness of 20 µm or less, comprising at least one patterned optically anisotropic layer having two or more regions different in birefringence property, all of the regions in the same layer being formed of the same layer-forming composition.
(2) The forgery-preventing foil according to the above item (1), wherein the patterned optically anisotropic layer is formed by polymerizing a reactive group-containing liquid-crystalline compound.
(3) The forgery-preventing foil according to the above item (1) or (2), wherein slow axes in the same patterned optically anisotropic layer are substantially constant.
(4) The forgery-preventing foil according to any one of the above items (1) to (3), further comprising an adhesive layer.
(5) The forgery-preventing foil according to any one of the above items (1) to (4), further comprising a reflective layer.
(6) The forgery-preventing foil according to any one of the above items (1) to (5), further comprising a protective layer.
(7) The forgery-preventing foil according to any one of the above items (1) to (6), further comprising a hologram layer.
(8) The forgery-preventing foil according to any one of the above items (1) to (7), wherein a birefringence property is so patterned that the latent image has three or more colors when manifested by observation in the normal direction of the optically anisotropic layer through a polarizing plate.
(9) The forgery-preventing foil according to any one of the above items (1) to (8), wherein the latent image is visible through the polarizing plate.
(10) A forgery-preventing transfer foil, comprising: a temporary support; and the forgery-preventing foil according to any one of the above items (1) to (9), which forgery-preventing foil is formed on the temporary support.
(11) The forgery-preventing transfer foil according to the above item (10), further comprising a release layer on the temporary support.
(12) A method for producing the forgery-preventing transfer foil according to the above item (10) or (11), comprising the sequential steps of:
   applying a layer-forming composition containing a reactive group-containing liquid-crystalline compound directly to a temporary support or to a temporary support with any other layer interposed therebetween, to form an optically anisotropic layer;
   heating the optically anisotropic layer in a pattern or irradiating the optically anisotropic layer with ionizing radiation in a pattern; and
   curing the optically anisotropic layer entirely by ionizing radiation or heat treatment.
(13) A forgery-prevented product, comprising: a product; and the forgery-preventing transfer foil according to the above item (10) or (11), which forgery-preventing transfer foil is transferred to at least part of the product.

Some examples of preferable modes of the present invention are described below in detail.

In the present specification, "to" denotes a range including numerical values described before and after it as a minimum value and a maximum value.

In the present specification, the term "forgery-preventing foil" means a foil with a thickness of 20 µm or less, preferably 10 µm or less, having a laminated structure including a forgery-preventing optically anisotropic layer. The lower limit of the thickness is not particularly limited, but the thickness of the foil is usually 1 µm or more. It may be a medium that can prevent items from being forged, or certify the manufacturer or the like of items, when attached to the items, or may be a medium or the like in the form of a package paper or the like that can certify the manufacturer or the like of items, while it may not be particularly limited.

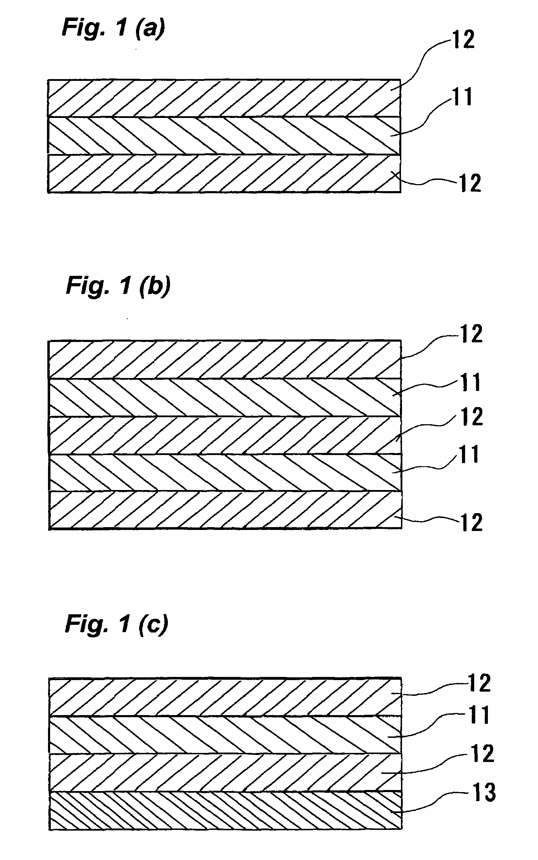

The forgery-preventing foil has at least one patterned optically anisotropic layer. The forgery-preventing foil may further include any other functional layer located on one or both sides of the patterned optically anisotropic layer (see, for example, Fig. 1(a), in which a single pattered optically anisotropic layer 11 is interposed between functional layers 12). A plurality of patterned optically anisotropic layers may be provided. In this case, any other functional layer may be provided between different patterned optically anisotropic layers (see, for example, Fig. 1(b), in which two patterned optically anisotropic layers 11 and three functional layers 12 are alternately laminated).

In the present specification, the term "forgery-preventing transfer foil" means an item including a temporary support and the forgery-preventing foil laminated thereon (see, for example, Fig. 1(c), in which a patterned optically anisotropic layer 11 and functional layers 12 are laminated on a temporary support 13). The forgery-preventing transfer foil may be press-bonded to items by hot stamping, in-line stamping, or any of various lamination processes, and then the temporary support may be peeled off so that the forgery-preventing foil can be transferred to the items. In the present specification, the layer to be transferred to items (which has the same meaning as the forgery-preventing foil) is also called "transfer layer."

In the present specification, the term "patterned optically anisotropic layer" means a layer that includes a plurality of regions different in birefringence property so that it can form a specific pattern. The regions different in birefringence property may be regions different in retardation and/or optical axis direction from each other. The regions are preferably different in retardation from each other. In the patterned optically anisotropic layer of the forgery-preventing foil of the present invention, the plurality of different birefringence property regions are all formed of the same compositions for layer formation in the same layer. The difference of birefringence property may be suitably due to a molecular alignment or the like in the composition, as will be explained below. Specifically, the patterned optically anisotropic layer according to the invention may be obtained by uniformly applying a layer-forming composition over the entire surface and then patterning the molecular alignment direction or the degree of the molecular alignment. In the present specification, the layer having a plurality of regions different in birefringence property (including the patterned optically anisotropic layer) or the laminate thereof is sometimes called a birefringent pattern.

Since the regions different in birefringence property are recognized when observed in a direction substantially normal to the medium for preventing forgery, it suffices for the regions to be divided by a plane parallel to the normal line of the plane of the medium for preventing forgery. The term "different in birefringence property" means that when the retardation is patterned, the resulting retardations differ by preferably 20 nm or more, more preferably 30 nm or more, even more preferably 50 nm or more, or when the optical axis is patterned, the resulting optical axial directions differ by preferably 5 degrees or more, more preferably 10 degrees or more, even more preferably 15 degrees or more.

In the present specification, the term "retardation" or "Re" means an in-plane retardation. The in-plane retardation (Re(λ)) can be measured by making light of wavelength λ nm incident in the normal direction of the film, in KOBRA 21ADH or WR (each trade name, manufactured by Oji Scientific Instruments). In the present specification, retardation or Re means one measured at wavelength 611±5 nm for R (Red), 545±5 nm for G (Green), or 435±5 nm for B (Blue), respectively, and means one measured at wavelength 545±5 nm or 590±5 nm unless otherwise specified any of color.

It is also noted that the term "optical axis" in the context of the specification means "slow axis" or "transmission axis".

It is to be noted that, regarding angles, the term "substantially" in the context of this specification means that a tolerance with respect to the precise angles is within the range of less than ±5°. Difference from the precise angles is preferably less than 4°, and more preferably less than 3°. It is also to be noted that, regarding retardation values, the term "substantially" in the context of the specification means that a tolerance with respect to the precise values is within the range of less than ±5%. It is also to be noted that the term "The Re value is substantially not zero" in the context of the specification means that the Re value is 5 nm or more. The measurement wavelength for refractive indexes is any visible light wavelength, unless otherwise specified. It is also to be noted that the term "visible light" in the context of the specification means light of a wavelength falling within the range from 400 to 700 nm.

In the specification, "retardation disappearance temperature" means a temperature at which the retardation of the optically anisotropic layer becomes 30% or lower of the retardation at 20°C of the same optically anisotropic layer when the temperature of the optically anisotropic layer is increased at the rate of 20 °C/minute from the state of 20°C.

In the specification, "no retardation disappearance temperature at 250°C or lower" means that the retardation of the optically anisotropic layer does not become 30% or lower of the retardation at 20°C of the same optically anisotropic layer when the temperature of the optically anisotropic layer is increased in the same manner as described above until the temperature reaches 250°C.

### [Forgery-preventing (Transfer) Foil]

As described above, the forgery-preventing transfer foil of the invention is a laminate of a temporary support and the elements of the forgery-preventing foil placed thereon, and optionally a release layer. Hereinafter, the forgery-preventing foil and the forgery-preventing transfer foil are generically referred to as "forgery-preventing (transfer) foil." The functional layer of the forgery-preventing (transfer) foil may be selected depending on the purpose, and the elements other than the temporary support and the release layer may be the same between the forgery-preventing foil and the forgery-preventing transfer foil. An example thereof is shown below. The forgery-preventing (transfer) foil may further include any additional functional layer other than those described below, as long as such an additional layer does not interfere with the function, according to need.

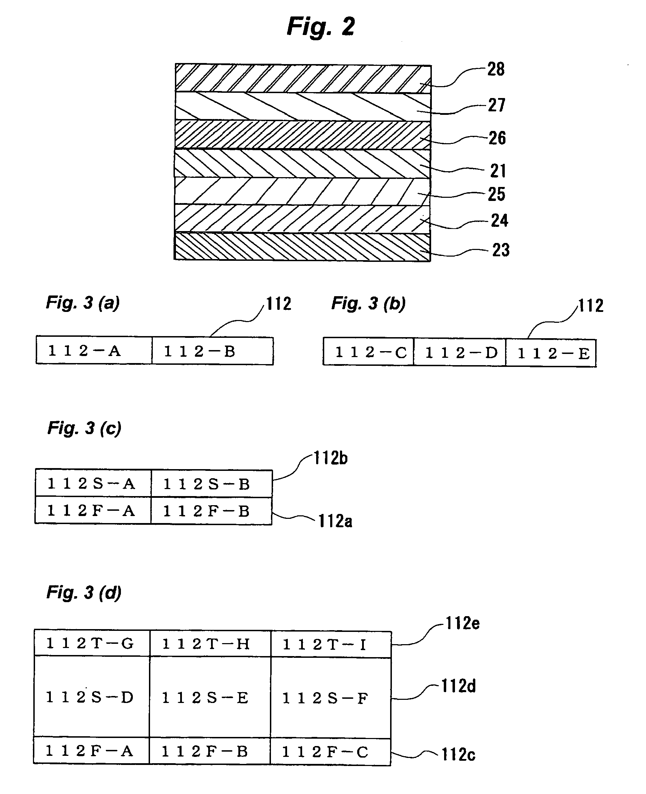

Fig. 2 is a cross-sectional view schematically showing the layered structure of an embodiment of the forgery-preventing transfer foil according to an embodiment of the present invention. In this embodiment, the layers other than a temporary support 23 and a patterned optically anisotropic layer 21 may be provided, according to need. A release layer 24 is a layer for facilitating the transfer of a protective layer 25 and other upper layers. After the transfer, the protective layer 25 will be the uppermost layer, which has the function of protecting the patterned optically anisotropic layer 21 from fouling, damage and the like. A hologram layer 26 may be provided to enhance the forgery-preventing performance or the design feature. A reflective layer 27 may be provided to increase the visibility of the latent image. This layer is not necessary, when the layers are transferred to a reflective item or when the layers are transferred to a transparent support so that the latent image can be observed therethrough. An adhesive layer 28 is a layer to bond the transfer layers to items. This layer is not always necessary, when the item has any adhesive layer.

### [Birefringent Pattern]

Figs. 3(a) to 3(d) are explanatory drawings showing some examples of the birefringent pattern in schematic cross-sectional form. The patterned birefringent product has at least one layer of patterned optically anisotropic layer 112. In Figs. 3(a) to 3(d), if necessary, any other functional layer may be provided between the optically anisotropic layers or outside the optically anisotropic layers, although not specifically shown. The patterned birefringent product shown in Fig. 3(a) is an example consisting of only one patterned optically anisotropic layer 112. The regions 112-A and 112-B are different in birefringence property from each other. The different birefringence property depending on the respective regions in a patterned optically anisotropic layer may be formed by exposing and heating in a patterned manner or the like. Fig. 3(b) shows a birefringent pattern in which three patterned optically anisotropic layers 112-C, 112-D and 112-E having different birefringence properties are provided. The layers 112-C, 112-D and 112-E have different retardations. Such three or more patterned optically anisotropic layers having different birefringence properties may be formed by plural times of pattern exposure or by pattern exposure with a mask. Alternatively, such layers may be formed by pattern heating in which the heating temperature or time is varied with area. In the birefringent pattern, a plurality of patterned optically anisotropic layers may be provided. A plurality of patterned optically anisotropic layers can provide a more complex latent image.

Fig. 3(c) shows another example of the birefringent pattern, which is formed by laminating a plurality of optically anisotropic layers and then performing pattern exposure or pattern heating to form the same pattern. There are provided a patterned optically anisotropic layer 112a having retardation regions 112F-A and 112F-B and another patterned optically anisotropic layer 112b placed thereon and having regions 112S-A and 112S-B each having a different retardation. In Fig. 3(c), the regions 112F-A and 112S-A have the same birefringency each other, and the regions 112F-B and 112S-B have the same birefringency each other. Such an example is useful to form a pattern having a region with a large retardation which cannot be produced by a single optically anisotropic layer.

The birefringent pattern shown in Fig. 3(d) is an example in which a plurality of optically anisotropic layers are given with independent patterns from one another. The laminate includes a patterned optically anisotropic layer 112c having retardation regions 112F-A, -B and -C, another patterned optically anisotropic layer 112d provided thereon and having retardation regions 112S-D, -E and -F, and a further patterned optically anisotropic layer 112e provided thereon and having retardation regions 112T-G, -H and -I. In Fig. 3(d), the regions 112F-A and 112S-D and 112T-G do not necessarily have the same birefringency each other, the regions 112F-B and 112S-E and 112T-H do not necessarily have the same birefringency each other, and the regions 112F-C and 112S-F and 112T-I do not necessarily have the same birefringency each other. For example, this example is an example that is useful when it is desired that two or more optically anisotropic layers having different retardations or slow axes from one another are provided and are given with independent patterns, respectively. For example, when a polarizing plate is rotated, such a layered structure can change the latent image or expand the color reproduction range of the latent image, so that the security performance can be increased. For example, the patterns independent from one another may be formed by transferring each of a desired number of patterned optically anisotropic layers onto the first patterned optically anisotropic layer, wherein the desired number of patterned optically anisotropic layers are each formed separately from the first layer. Alternatively, a desired number of optically anisotropic layers having undergone only pattern exposure may be each transferred onto the first optically anisotropic layer having undergone only pattern exposure, and then they may be baked at a time so that a plurality of patterned optically anisotropic layers can be formed. The latter method can reduce the number of baking processes, which are relatively highly-loaded processes, to the minimum.

### [Preparation method of patterned optically anisotropic layer]

The patterned (patterning) optically anisotropic layer can be prepared in accordance with a method comprising a step of carrying out a treatment such as a patterned light exposure, a patterned heating or so for forming different retardation regions onto the optically anisotropic layer. Although an optically anisotropic layer with self supporting property may be used as the optically anisotropic layer, it is also preferable that the patterned optically anisotropic layer is formed as the patterned birefringent product including the patterned optically anisotropic layer using a birefringent pattern builder having the optically anisotropic layer.

Hereinafter, description will be made in detail on the patterned optically anisotropic layer, the birefringent pattern builder, and the method of the patterned birefringent product. However, it is to be noted that the present invention is not limited to the embodiments below. Any other embodiments can be also carried out referring to the description below and known methods.

### [Optically Anisotropic Layer]

The optically anisotropic layer in the birefringent pattern builder is the layer having at least one incident direction, of which retardation (Re) is not substantively zero when a phase difference is measured. In other words, the optically anisotropic layer is the layer having non-isotropic optical characteristic. The optically anisotropic layer preferably has a retardation disappearance temperature. Because the optically anisotropic layer has the retardation disappearance temperature, a retardation of a region of a part of an optically anisotropic layer can be caused to disappear by, for example, a patterned heating. The retardation disappearance temperature is preferably 20°C or higher and 250°C or lower, more preferably 40°C to 245°C, further preferably 50°C to 245°C, and most preferably 80°C to 240°C.

In addition, as the optically anisotropic layer, an optically anisotropic layer of which the retardation disappearance temperature rises by light exposure to the birefringence pattern builder is used. As a result, differences in a retardation disappearance temperature will appear between the unexposed part and the exposed part by patterned light exposure. By baking the birefringent pattern builder at a temperature higher than the retardation disappearance temperature of the unexposed part and lower than the retardation disappearance temperature of the exposed part, only the retardation of the unexposed part can be selectively caused to disappear. Furthermore, the retardation disappearance temperature can be changed depending on an exposure amount.

The retardation value of the regions where retardation is imparted in the optically anisotropic layer may be 5 nm or more, preferably 10 nm or more and 2,000 nm or less, particularly preferably 20 nm or more and 1,000 nm or less, at 20°C, most preferably selectable to be the desired value in the above range. If the retardation is too low, it may be difficult to form a birefringent pattern in some cases. If the retardation is too high, the retardation-induced change in the color of the latent image may be difficult to recognize in some cases.

The optically anisotropic layer preferably contains a polymer. By containing the polymer, the forgery-preventing transfer foil can meet various requirements such as birefringence property, transparency, solvent-resistance, toughness, and flexibility. The polymer in the optically anisotropic layer preferably has an unreacted reactive group. The exposure to light causes an unreacted reactive group to react to thereby cause the crosslinking of a polymer chain, thus consequently allowing the retardation disappearance temperature to increase easily.

The production method of the optically anisotropic layer is not particularly limited. Examples include a method of conducting coating a solution comprising a liquid-crystalline compound having at least one reactive group and drying the solution to thereby form a liquid-crystalline phase, and then applying heat or irradiating ionizing radiation for polymerization and fixation; a method of stretching a layer formed by polymerizing and fixing a monomer having two or more reactive groups; a method of stretching a layer consisting of a polymer, after a reactive group is being introduced to the layer by using a coupling agent; and a method of stretching a layer consisting of a polymer and then introducing a reactive group to the layer by using a coupling agent.

Further, the optically anisotropic layer according to the present invention may be formed by transfer.

### [Optically Anisotropic Layer Formed by Polymerizing and Fixing Composition Comprising Liquid-crystalline Compound]

The production method of the optically anisotropic layer is explained below, wherein coating with a solution comprising a liquid-crystalline compound having at least one reactive group is conducted and the solution is dried to thereby form a liquid-crystalline phase, and then the liquid-crystalline phase is polymerized and fixed by applying heat or irradiating ionizing radiation. According to this method, it is easy to obtain an optically anisotropic layer which is thinner in thickness but has an equal retardation compared with the layer obtainable by the method of forming an optically anisotropic layer by stretching of a polymer, which method will be explained later.

### [Liquid-crystalline Compound]

The liquid-crystalline compounds can generally be classified by molecular geometry into rod-like one and discotic one. Each category further includes low-molecular type and high-molecular type. The high-molecular type generally refers to that having a degree of polymerization of 100 or above ("Kobunshi Butsuri-Soten'i Dainamikusu (Polymer Physics-Phase Transition Dynamics), by Masao Doi, p. 2, published by Iwanami Shoten, Publishers, 1992). Either type of the liquid-crystalline compound may be used in the present invention, wherein it is preferable to use a rod-like liquid-crystalline compound or a discotic liquid-crystalline compound. A mixture of two or more kinds of rod-like liquid-crystalline compounds, a mixture of two or more kinds of discotic liquid-crystalline compounds, or a mixture of a rod-like liquid-crystalline compound and a discotic liquid-crystalline compound may also be used. It is more preferable that the optically anisotropic layer is formed using a rod-like liquid-crystalline compound having a reactive group or a discotic liquid-crystalline compound having a reactive group, because such a compound can reduce temperature- or moisture-dependent changes; and it is still further preferable that the optically anisotropic layer is formed using at least one compound having two or more reactive groups in a single liquid-crystalline molecule. The liquid-crystalline compound may be used in a form of a mixture of two or more kinds of compounds, wherein at least one of the compounds preferably has two or more reactive groups.

It is also preferred that liquid-crystalline compound has two or more kinds of reactive groups which have different polymerization condition from each other. In such a case, an optically anisotropic layer containing a polymer having an unreacted reactive group can be produced by only polymerizing a specific kind of reactive group among plural types of reactive groups by selecting polymerization condition. The polymerization condition to be employed may be wavelength range of the irradiation of ionized radiation for the polymerization and fixing, or mechanism of polymerization. Preferably, the condition may be polymerization initiator, which can control polymerization of compound having a combination of a radically polymerizable group and a cationically polymerizable group. The combination of an acrylic group and/or a methacrylic group as the radically polymerizable group and a vinyl ether group, an oxetane group, and/or an epoxy group as the cationically polymerizable group is particularly preferred, because the reactivity can be controlled easily.

Examples of the rod-like liquid-crystalline compound include azomethine compounds, azoxy compounds, cyanobiphenyl compounds, cyanophenyl esters, benzoates, cyclohexanecarboxylic acid phenyl esters, cyanophenylcyclohexane compounds, cyano-substituted phenylpyrimidine compounds, alkoxy-substituted phenylpyrimidine compounds, phenyldioxane compounds, tolan compounds, and alkenylcyclohexylbenzonitrile compounds. Not only the low-molecular-weight liquid-crystalline compounds as listed in the above, but also high-molecular-weight liquid-crystalline compounds may also be used. The high-molecular-weight liquid-crystalline compounds are compounds obtained by polymerizing a low-molecular-weight liquid-crystalline compound having a reactive group. Among such low-molecular-weight liquid-crystalline compounds, liquid-crystalline compounds represented by formula (I) are preferred.

Formula (I) Q¹-L¹-A¹-L³-M-L⁴-A²-L²-Q²

In formula (1), Q¹ and Q² each independently represent a reactive group; L¹, L², L³ and L⁴ each independently represent a single bond or a divalent linking group; A¹ and A² each independently represent a spacer group having 2 to 20 carbon atoms; and M represents a mesogen group.

Hereinafter, the rod-like liquid-crystalline compound having a reactive group represented by formula (I) will be described in more detail. In formula (I), Q¹ and Q² each independently represent a reactive group. The polymerization reaction of the reactive group is preferably addition polymerization (including ring opening polymerization) or condensation polymerization. In other words, the reactive group is preferably a functional group capable of addition polymerization reaction or condensation polymerization reaction. Examples of reactive groups are shown below. In formula (I), Et represents ethyl group, and Pr represents propyl group.

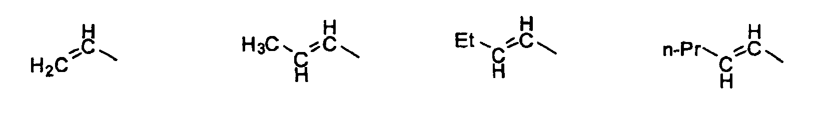

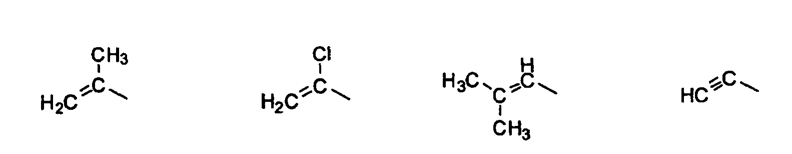

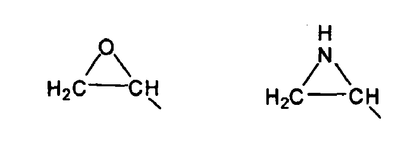

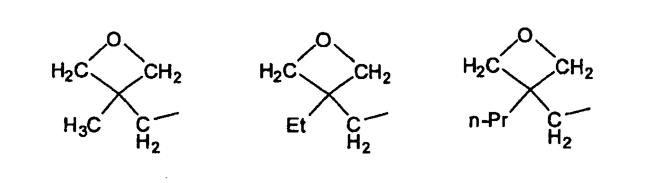

-SH -OH -NH₂

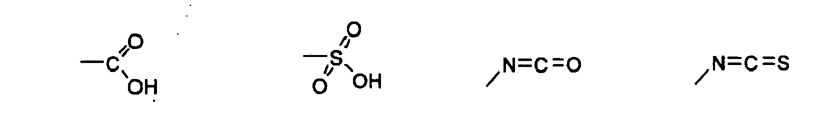

The divalent linking groups represented by L¹, L², L³ and L⁴ are preferably those selected from the group consisting of -O-, -S-, -CO-, -NR²-, -CO-O-, -O-CO-O-, - CO-NR²-, -NR²-CO-, -O-CO-, -O-CO-NR²-, -NR²-CO-O- and -NR²-CO-NR²-. R² represents an alkyl group having 1 to 7 carbon atoms or a hydrogen atom. In formula (I), Q¹-L¹- and Q² -L²- are each preferably a CH₂=CH-CO-O-, CH₂=C(CH₃)-CO-O-, CH₂=C(Cl)-CO-O-, or -CH₂-O- linked oxetanyl group, most preferably a CH₂=CH-COO- and/or a -CH₂-O- linked oxetanyl group.

A¹ and A² each represent a spacer group having 2 to 20 carbon atoms; preferably an alkylene, alkenylene or alkynylene group having 2 to 12 carbon atoms; and particularly preferably an alkylene group. The spacer group is more preferably has a chain form, and may contain non-neighboring oxygen atoms or sulfur atoms. The spacer group may have a substituent and may be substituted by a halogen atom (fluorine, chlorine, and bromine), a cyano group, a methyl group or an ethyl group.

The mesogen group represented by M may be selected from any known mesogen groups, and is preferably selected from the group represented by formula (II).

Formula (II) -(-W¹-L⁵)ₙ-W².

In formula (II), W¹ and W² each independently represent a divalent cyclic alkylene or alkenylene group, a divalent arylene group, or a divalent hetero-cyclic group; and L⁵ represents a single bond or a linking group. Examples of the linking group represented by L⁵ include those exemplified as examples of L¹ to L⁴ in the formula (I) and -CH₂-O- and -O-CH₂-. In formula (II), n is 1, 2 or 3.

Examples of W¹ and W² include 1,4-cyclohexanediyl, 1,4-phenylene, pyrimidine-2,5-diyl, pyridine-2,5-diyl, 1,3,4-thiazole-2,5-diyl, 1,3,4-oxadiazole-2,5-diyl, naphtalene-2,6-diyl, naphtalene-1,5-diyl, thiophen-2,5-diyl, pyridazine-3,6-diyl. As for 1,4-cyclohexane diyl, either structural isomers having trans-form or cis-form, or any mixture based on an arbitrary compositional ratio may be used in the present invention, where the trans-form is preferable. Each of W¹ and W² may have a substituent, where the examples of the substituent include a halogen atom (a fluorine atom, a chlorine atom , a bromine atom , an iodine atom), a cyano group, an alkyl group having 1 to 10 carbon atoms (methyl, ethyl, propyl, etc.), an alkoxy group having 1 to 10 carbon atoms (methoxy, ethoxy, etc.), an acyl group having 1 to 10 carbon atoms (formyl, acetyl, etc.), an alkoxycarbonyl group having 1 to 10 carbon atoms (methoxycarbonyl, ethoxycarbonyl, etc.), an acyloxy group having 1 to 10 carbon atoms (acetyloxy, propionyloxy, etc.), a nitro group, a trifluoromethyl group and a difluoromethyl group.

Basic skeletons of the preferable examples of the mesogen group represented by formula (II) are listed below. These groups may further be substituted by the above-described substituent having W¹ and W².

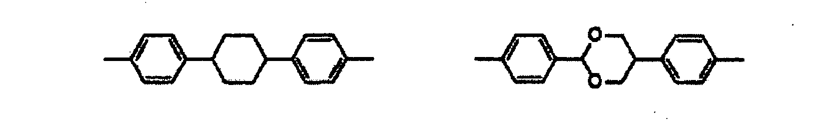

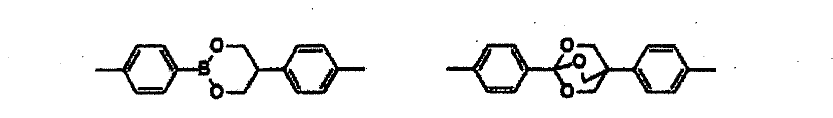

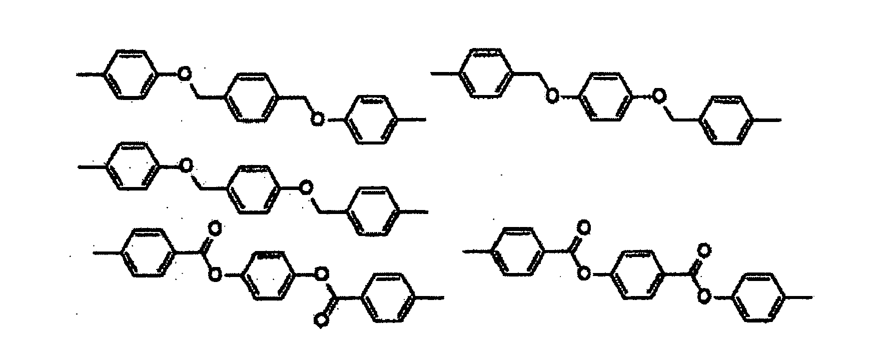

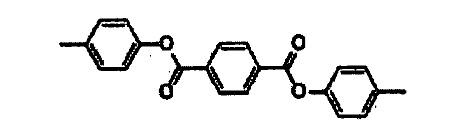

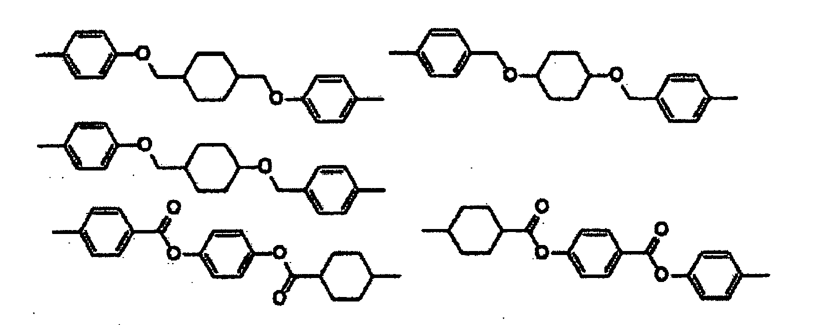

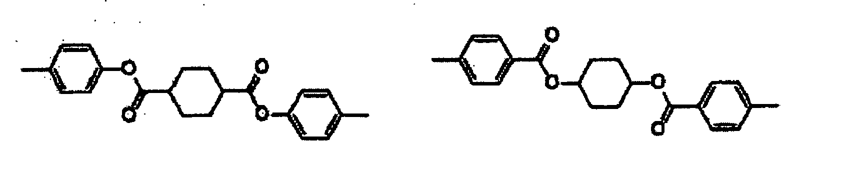

Examples of the compound represented by formula (I) include, but not to be limited to, those described below. The compounds represented by formula (I) may be synthesized according to the method described in JP-T-11-513019 ("JP-T" means a published Japanese translation of PCT international application) (WO97/00600).

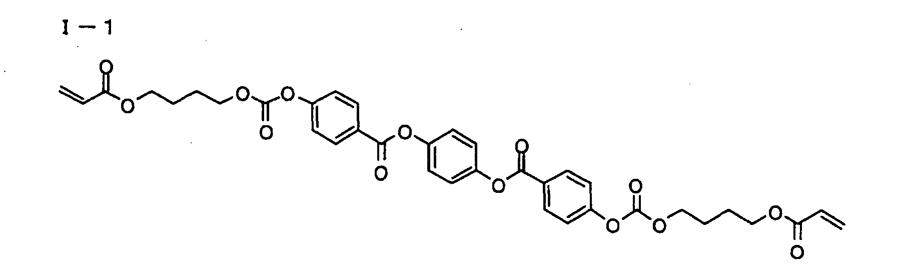

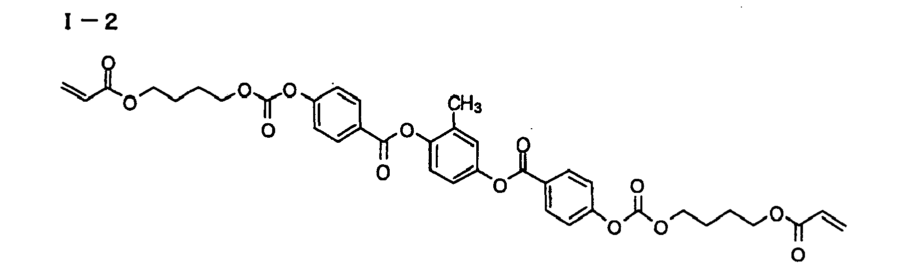

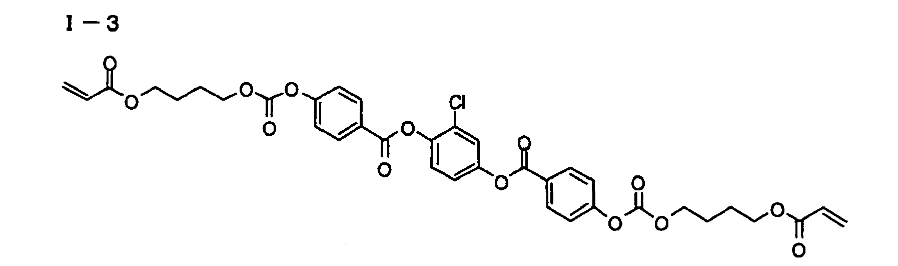

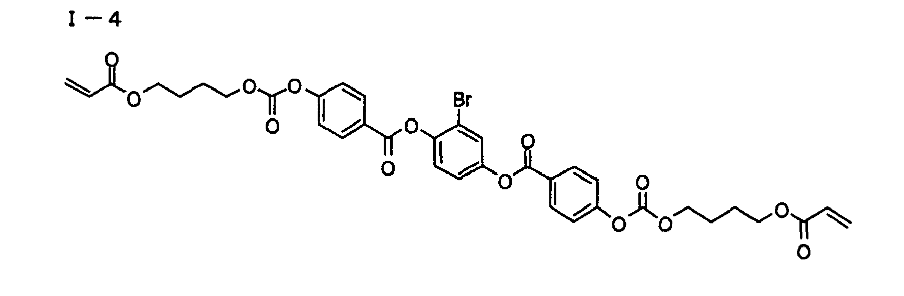

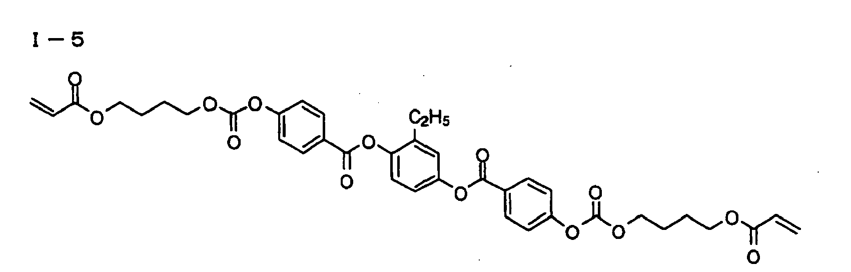

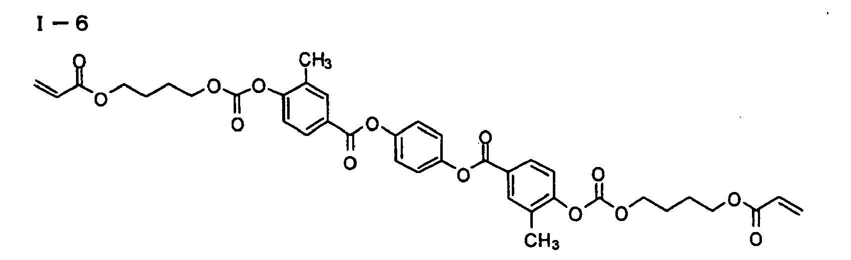

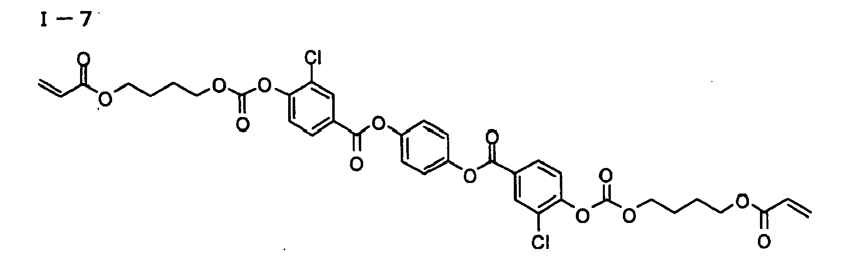

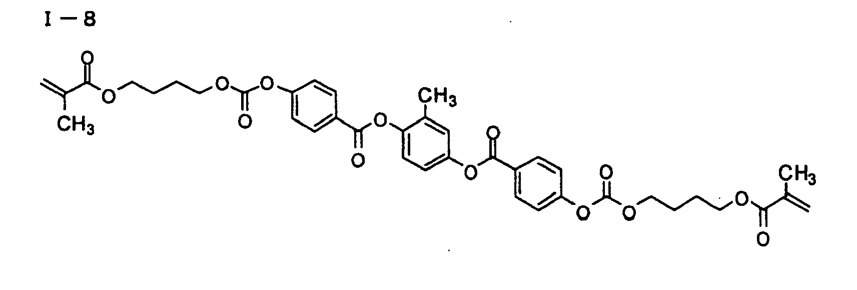

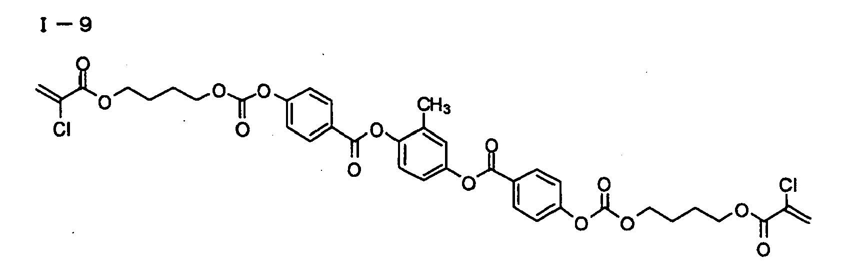

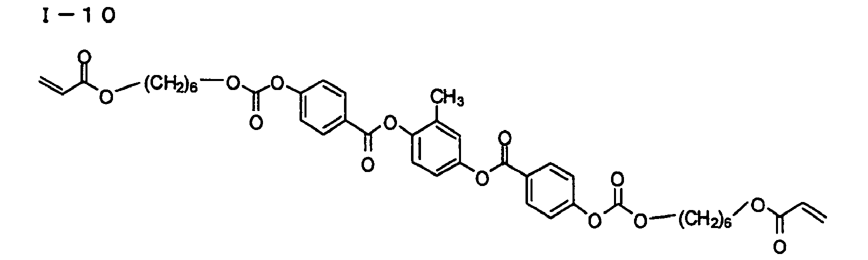

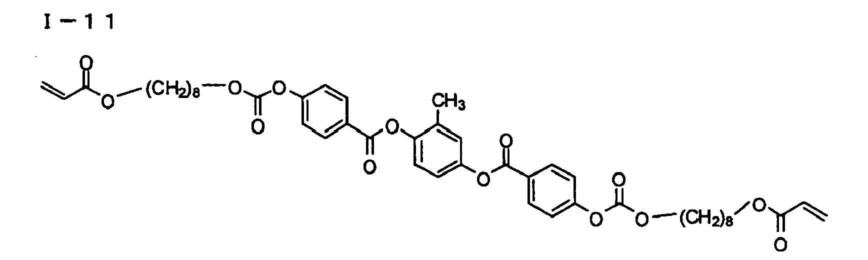

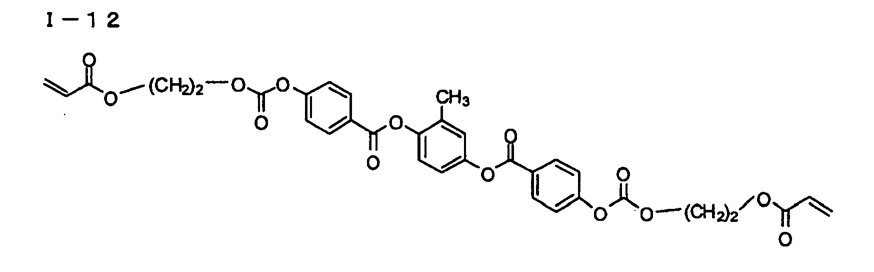

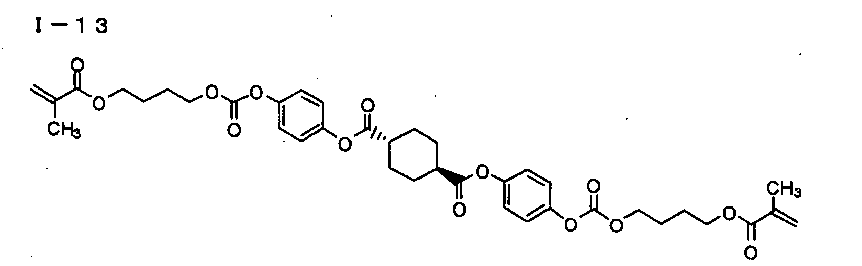

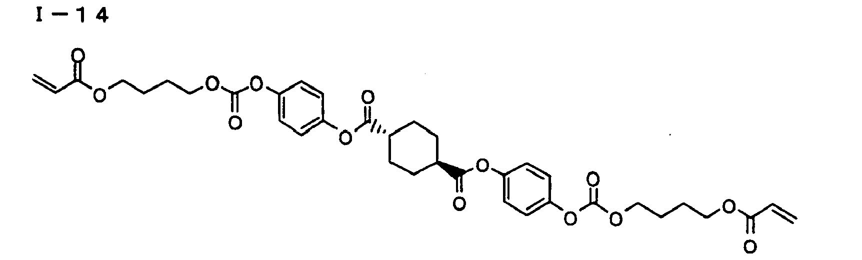

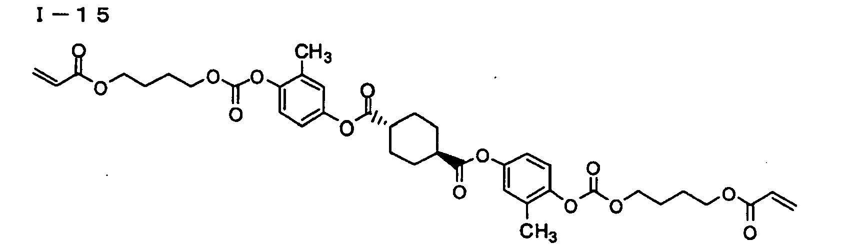

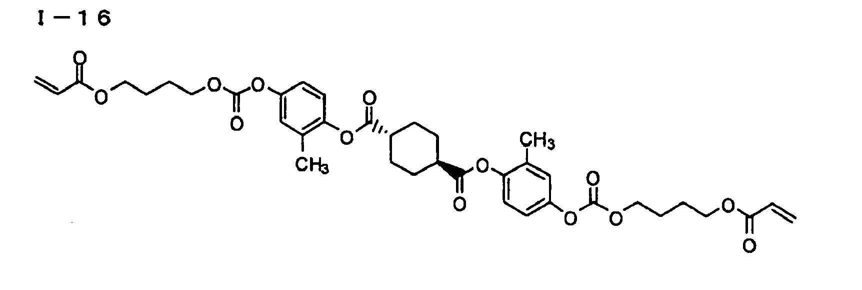

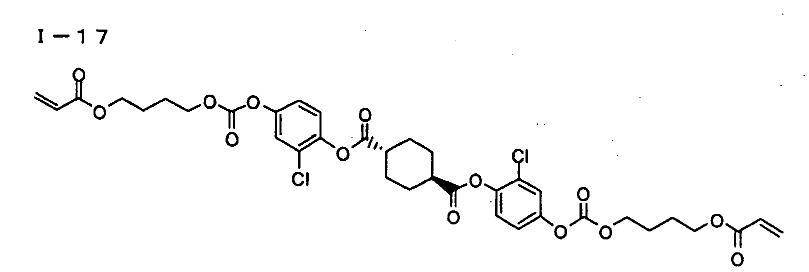

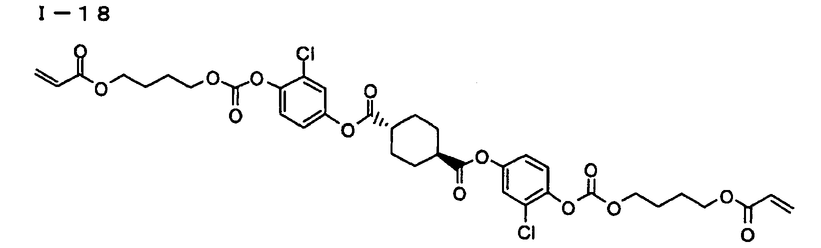

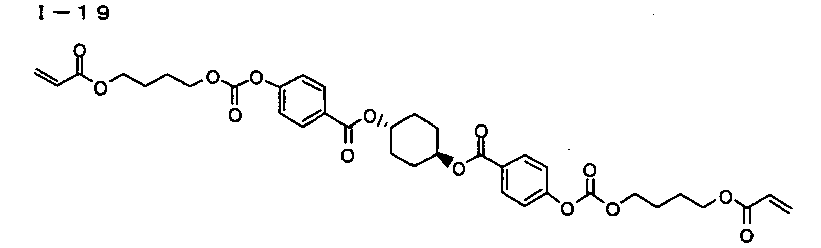

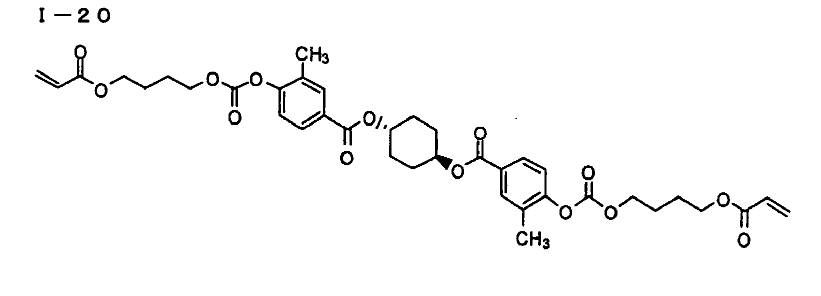

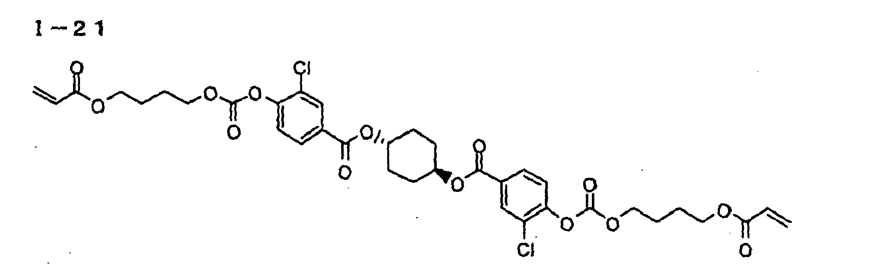

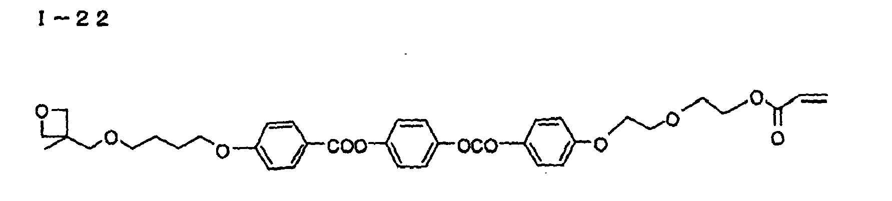

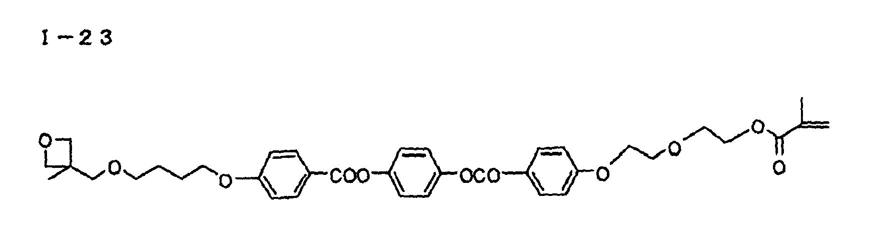

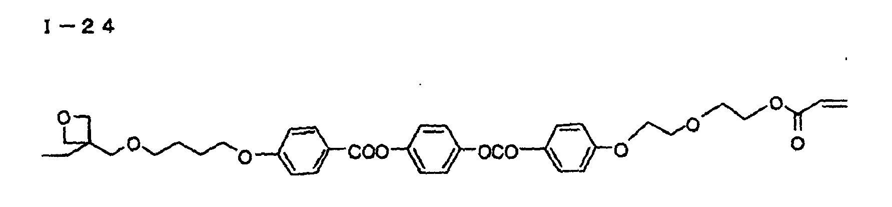

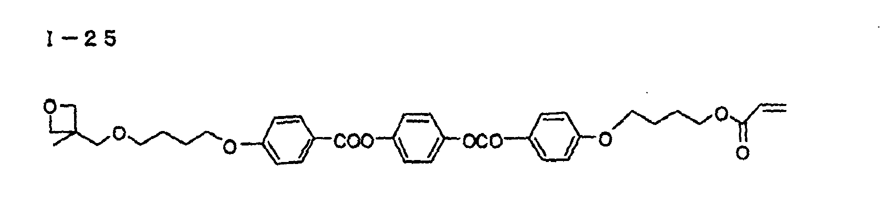

In another aspect of the present invention, a discotic liquid crystal is used in the optically anisotropic layer. The optically anisotropic layer is preferably a layer of a low-molecular-weight liquid-crystalline discotic compound such as monomer or a layer of a polymer obtained by polymerization (curing) of a polymerizable liquid-crystalline discotic compound. Examples of the discotic (disk-like) compounds include benzene derivatives disclosed in a study report of C. Destrade et al., Mol. Cryst., vol. 71, page 111 (1981); truxene derivatives disclosed in a study report of C. Destrade et al., Mol. Cryst., vol. 122, page 141 (1985), and Phyics. Lett., A, vol. 78, page 82 (1990); cyclohexane derivatives disclosed in a study report of B. Kohne et al., Angew. Chem. vol. 96, page 70 (1984); and azacrown series and phenylacetylene series macrocycles disclosed in a study report of J. M. Lehn et al., J. Chem. Commun., page 1794 (1985), and a study report of J. Zhang et al., J. Am. Chem. Soc., vol. 116, page 2655 (1994). The above mentioned discotic (disk-like) compounds generally have a discotic core in the central portion and groups (L), such as linear alkyl or alkoxy groups or substituted benzoyloxy groups, which are substituted radially from the core. Among them, there are compounds exhibiting liquid crystallinity, and such compounds are generally called as discotic liquid crystal. However, such molecular assembly in uniform alignment shows negative uniaxiality, although it is not limited to the description. In the specification, the term of "formed of a discotic compound" is used to mean not only when finally comprising the discotic compound as a low-molecular weight compound, but also when finally comprising a high-molecular weight discotic compound, no longer exhibiting liquid crystallinity, formed by carrying out polymerizing or crosslinking reaction of the low-molecular weight discotic compound having at least one reactive group capable of thermal reaction or photo reaction under heating or under irradiation of light.

In the present invention, it is preferred to use the discotic liquid-crystalline compound represented by formula (III).

Formula (III) D(-L-P)n₁

In formula (III), D represents a disc core; L represents a divalent linking group; P is a polymerizable group; and n₁ represents an integer of 4 to 12.

Preferable examples of the disc core (D), the divalent linking group (L) and the polymerizable group (P) in formula (III) are (D1) to (D 15), (L1) to (L25), and (P1) to (P18), respectively, described in JP-A-2001-4837; and the contents relating to the disc core (D), the divalent linking group (L) and the polymerizable group (P) in the patent publication are preferably employed in the present invention.

Preferred examples of the above discotic compound include compounds disclosed in paragraph Nos. [0045] to [0055] of JP-A-2007-121986.

The optically anisotropic layer is preferably a layer formed according to a method comprising applying a composition containing liquid-crystalline compound as a layer-forming composition (e.g., a coating liquid) to a surface of an aligned layer, described in detail later, aligning liquid-crystalline molecules as to make an aligned state exhibiting a desired crystalline phase, and fixing the aligned state by applying heat or irradiating ionizing radiation.

When a discotic liquid-crystalline compound having reactive groups is used as the liquid-crystalline compound, the discotic compounds in the layer may be fixed in any alignment state such as a horizontal alignment state, vertical alignment state, tilted alignment state, and twisted alignment state. In the present specification, the term "horizontal alignment" means that, regarding rod-like liquid-crystalline compounds, the molecular long axes thereof and the horizontal plane of a support are parallel to each other, and, regarding discotic liquid-crystalline compounds, the disk-planes of the cores thereof and the horizontal plane of a support are parallel to each other. However, they are not required to be exactly parallel to each other, and, in the present specification, the term "horizontal alignment" should be understood as an alignment state in which molecules are aligned with a tilt angle against a horizontal plane less than 10°. The tilt angle is preferably from 0° to 5°, more preferably 0° to 3°, much more preferably from 0° to 2°, and most preferably from 0° to 1°.

When two or more optically anisotropic layers formed of the compositions containing liquid-crystalline compounds are stacked, the combination of the liquid-crystalline compounds is not particularly limited, and the combination may be a stack formed of layers all comprising discotic liquid-crystalline compounds, a stack formed of layers all comprising rod-like liquid-crystalline compounds, or a stack formed of a layer comprising discotic liquid-crystalline compounds and a layer comprising rod-like liquid-crystalline compounds. Combination of alignment state of the individual layers also is not particularly limited, allowing stacking of the optically anisotropic layers having the same alignment states, or stacking of the optically anisotropic layer having different alignment states.

The optically-anisotropic layer is preferably formed by applying a coating solution, which contains at least one liquid-crystalline compound, the following polymerization initiator and other additives, on a surface of an aligned layer described below. Organic solvents are preferably used as a solvent for preparing the coating solution, and examples thereof include amides (e.g., N,N-dimethylformamide), sulfoxides (e.g., dimethylsulfoxide), heterocyclic compounds (e.g., pyridine), hydrocarbons (e.g., benzene, hexane), alkyl halides (e.g., chloroform, dichloromethane), esters (e.g., methyl acetate, butyl acetate), ketones (e.g., acetone, methylethylketone), and ethers (e.g., tetrahydrofuran, 1,2-dimethoxyethane). In particular, alkyl halides and ketones are preferable. Two or more kinds of organic solvents may be used in combination.

### [Fixing of Liquid-Crystalline Compounds in an Alignment State]

It is preferred that the liquid-crystalline compounds in an alignment state are fixed without disordering the state. Fixing is preferably carried out by the polymerization reaction of the reactive groups contained in the liquid-crystalline compounds. The polymerization reaction includes thermal polymerization reaction using a thermal polymerization initiator and photo-polymerization reaction using a photo-polymerization initiator. Photo-polymerization reaction is preferred. Photo-polymerization reaction may be any of radical polymerization and cation polymerization. Examples of the radical photo-polymerization initiators include α-carbonyl compounds (described in U.S. Patent Nos. 2,367,661 and 2,367,670), acyloin ethers (described in U.S. Patent No. 2,448,828), α-hydrocarbon-substituted aromatic acyloin compounds (described in U.S. Patent No. 2,722,512), polynuclear quinone compounds (described in U.S. Patent Nos. 3,046,127 and 2,951,758), combinations of a triarylimidazole dimer with p-aminophenyl ketone (described in U.S. Patent No. 3,549,367), acridine and phenazine compounds (described in JP-A-60-105667 and U.S. Patent No. 4,239,850), and oxadiazol compounds (described in U.S. Patent No. 4,212,970). As the cationic-polymerization initiator, examples include organic sulfonium salts, iodonium salts, and phosphonium salts. The organic sulfonium salts are preferred, and triphenyl sulfonium salts are particularly preferred. As a counter ion of these compounds, hexafluoroantimonate, hexafluorophosphate, or the like is preferably used.

It is preferable to use the photopolymerization initiator in an amount of 0.01 to 20 mass%, more preferably 0.5 to 5 mass%, based on the solid content in the coating solution. In the photoirradiation for polymerizing the liquid-crystalline compounds, it is preferable to use ultraviolet ray. The irradiation energy is preferably from 10 mJ/cm² to 10 J/cm², more preferably from 25 to 800 mJ/cm². Illuminance is preferably 10 to 1,000 mW/cm², more preferably 20 to 500 mW/cm², and further preferably 40 to 350 mW/cm². The irradiation wavelength has a peak falling within the range from preferably 250 to 450 nm, more preferably 300 to 410 nm. Irradiation may be carried out in an atmosphere of inert gas such as nitrogen gas and/or on heating to facilitate the photo-polymerization reaction.

### [Fixing the Alignment State of Liquid-Crystalline Compounds Having Radically Reactive Group and Cationically Reactive Group]

As described above, it is also preferred that a liquid-crystalline compound has two or more kinds of reactive groups which have different polymerization condition from each other. In such a case, an optically anisotropic layer containing a polymer having an unreacted reactive group can be produced by polymerizing only a specific kind of reactive groups among plural kinds of reactive groups by selecting polymerization condition. The conditions which are particularly suitable for the polymerization and fixation of the liquid-crystalline compounds having radically reactive group and cationically reactive group (the aforementioned I-22 to I-25 as specific examples) are explained below.

First, as the polymerization initiator, only a photopolymerization initiator which acts on a reactive group intended to be polymerized is preferred to be used. That is, it is preferred that, only radical photopolymerization initiator is used when radically reactive groups are selectively polymerized, and only cationic photopolymerization initiator is used when cationically reactive groups are selectively polymerized. The used amount of the photopolymerization initiator falls in the range preferably from 0.01 to 20% by mass, more preferably from 0.1 to 8% by mass, and further preferably from 0.5 to 4% by mass of the total solid content in the coating solution.

Second, light irradiation for the polymerization is preferably conducted by using ultraviolet ray. When the irradiation energy and/or illuminance are too high, non-selective reaction of both of the radically reactive group and cationically reactive group may occur. In view of the above, the irradiation energy is preferably 5 to 500 mJ/cm², more preferably 10 to 400 mJ/cm², and particularly preferably 20 to 200 mJ/cm². The illuminance is preferably 5 to 500 mW/cm², more preferably 10 to 300 mW/cm², and particularly preferably 20 to 100 mW/cm². As the irradiation wavelength, the light has a peak falling within the range preferably from 250 to 450 nm, more preferably from 300 to 410 nm.

Among photopolymerization reaction, the reaction by using a radical photopolymerization initiator is inhibited by oxygen, and the reaction by using a cationic photopolymerization initiator is not inhibited by oxygen. Therefore, when one of the reactive groups of the liquid-crystalline compounds having radically reactive group and cationically reactive group is selectively reacted, it is preferred that the light irradiation is carried out in an atmosphere of inert gas such as nitrogen gas when the radically reactive group is selectively reacted, and positively in an atmosphere containing oxygen (for example, in air atmosphere) when the cationically reactive group is selectively reacted.

### [Horizontal Alignment Agent]

At least one kind of compound selected from the group consisting of the compounds represented by formula (1), (2) or (3) described in paragraph Nos. [0068] to [0072] of JP-A-2007-121986, and fluorine-containing homopolymer or copolymer using the monomer represented by formula (4), which are shown below, may be added to the composition used for forming the optically anisotropic layer, in order to align the molecules of the liquid-crystalline compounds substantially horizontally.

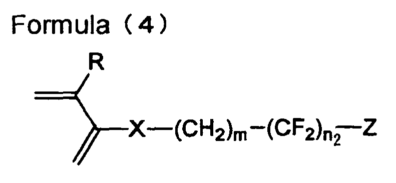

In formula (4), R represents a hydrogen atom or a methyl group, X represents an oxygen atom or a sulfur atom, Z represents a hydrogen atom or a fluorine atom; m represents an integer of 1 to 6, and n₂ represents an integer of 1 to 12. In addition to the fluorine-containing polymer prepared by using the monomer represented by formula (4), the polymer compounds described in JP-A-2005-206638 and JP-A-2006-91205 can be used as horizontal alignment agents for reducing unevenness in coating. The methods of preparation of the compounds are also described in the publications.

The additive amount of the horizontal alignment agents is preferably 0.01 to 20% by mass, more preferably 0.01 to 10% by mass, and most preferably 0.02 to 1% by mass with respect to the mass of the liquid-crystalline compound. The compounds represented by any of the aforementioned formulae (1) to (4) may be used singly, or two or more types of them may be used in combination.

The method of fixation by polarized light irradiation disclosed in U.S. Patent Application Publication No. US2008-143926 may also be used as the method of fixation of the liquid-crystalline compound alignment other than the method of fixation of the alignment of the liquid-crystalline compound having the radically reactive group and the cationically reactive group.

### [Optically Anisotropic Layer Produced by Stretching]

The optically anisotropic layer may be produced by stretching a polymer. When a polymer in the optically anisotropic layer, which is preferred to have at least one unreacted reactive group as described above, is produced, a polymer having in advance a reactive group may be stretched, or a reactive group may be introduced by using a coupling agent or the like to an optically anisotropic layer prepared by stretching. The characteristics of the optically anisotropic layer obtained by stretching include low cost, self-supporting property (a support is not needed when the layer is formed or maintained), and the like.

### [Post-Treatment of Optically Anisotropic Layer]

Various post-treatments may be conducted to modify the optically anisotropic layer produced. Examples of the post treatments include corona treatment for improving adhesiveness, addition of a plasticizer for improving plasticity, addition of a thermal polymerization inhibitor for improving storage stability, and coupling treatment for improving reactivity. When the polymer in the optically anisotropic layer has an unreacted reactive group, addition of a polymerization initiator suited to the reactive group may also be a useful modification method. For example, by addition of a radical photopolymerization initiator to an optically anisotropic layer fixed by polymerization of a liquid-crystalline compound having a cationically reactive group and a radically reactive group by using a cationic photopolymerization initiator, the reaction of the unreacted radically reactive group in the patterned light exposure afterward can be promoted. As the method of addition of the plasticizer or the photopolymerization initiator, examples include immersing the optically anisotropic layer in a solution of the desired additive, and applying a solution of the desired additive to the optically anisotropic layer for the permeance of the solution. Further, when another layer is applied to the optically anisotropic layer, the desired additive may be added to the coating solution of the layer for permeance to the optically anisotropic layer.

### [Birefringent pattern builder]

The birefringent pattern builder is a material for producing a patterned birefringent product having a patterned optically anisotropic layer, and a material from which birefringence pattern can be obtained by proceeding predetermined steps. The birefringent pattern builder may generally be in a shape of film or sheet. The birefringent pattern builder may include a functional layer which can be applied with various accessory functions, other than the optically anisotropic layer. Examples of the functional layer include an adhesive layer, a reflective layer, a protective layer, and the like. These layers may be formed on the temporary support.

### [Temporary Support]

The birefringent pattern builder may be formed directly on the temporary support or formed on the temporary support with an aligned layer interposed therebetween. The temporary support for use in forming the birefringent pattern builder may be transparent or opaque and is not limited therto, as long as it is provided in an easily peelable manner after all the layers are formed.

As such a temporary support, examples include plastic films such as cellulose ester (for example, cellulose acetate, cellulose propionate, and cellulose butyrate), polyolefin, poly(meth)acrylate (for example, polymethylmethacrylate), polycarbonate, polyester, polysulfone, and cycloolefin-based polymer (for example, norbornene based polymer). For the purpose of optical property examination in a manufacturing process, the support is preferably selected from transparent and low-birefringence polymer films. Examples of the low-birefringence polymer films include cellulose ester films and norbornene based polymer films. Commercially available polymers such as a norbornene based polymer, "ARTON" provided by JSR Corporation and "ZEONEX" and "ZEONOR" provided by ZEON CORPORATION may be used. Polycarbonate, poly(ethylene terephthalate), or the like which is inexpensive, may also be preferably used. In view of easiness of transfer, the thickness of the temporary support is preferably 5 to 1,000 µm, more preferably 10 to 200 µm, even more preferably 15 to 50 µm.

### [Release Layer]

A release layer may be provided on the temporary support. In general, a releasing resin, a release agent-containing resin, a siloxane-based resin, an acrylic melamine-based resin, or the like may be used to form the release layer.

The release layer may be formed by a process including applying a solution containing the above resin to form a coating, drying the coating, and baking the coating at a temperature of about 150°C to about 200°C. The thickness of the release layer is preferably 0.05 µm to 3.0 µm, more preferably 0.1 µm to 1.0 µm.

### [Aligned Layer]

As described above, an aligned layer may be used for forming the optically anisotropic layer. The aligned layer may be formed on the surface of a support or a temporary support, or on the surface of a support or a temporary support each on which a functional layer is provided. The aligned layer has a function of controlling the alignment direction of liquid-crystalline compounds provided thereon. The aligned layer may be any kind of layers, as far as it has such a function of giving the alignment to the optically anisotropic layer. Preferable examples of the aligned layer include a layer provided by rubbing a layer formed of an organic compound (preferably a polymer), an oblique-vapor-deposited layer of an inorganic compound, a layer having microgrooves, or a built-up layer of ω-tricosanoic acid, dioctadecylmethylammonium chloride, methyl stearate or the like formed by the Langmuir-Blodgett (LB) film method. Further, aligned layers in which a dielectric substance is oriented by applying an electric or magnetic field are also exemplified.

Examples of the organic compound, which can be used for forming the aligned layer, include polymers such as polymethyl methacrylate, acrylic acid/methacrylic acid copolymer, styrene/maleimide copolymer, polyvinyl alcohol, poly(N-methyrol acrylamide), polyvinylpyrrolidone, styrene/vinyl toluene copolymer, chlorosulfonated polyethylene, nitrocellulose, polyvinyl chloride, chlorinated polyolefin, polyester, polyimide, vinyl acetate/vinyl chloride copolymer, ethylene/vinyl acetate copolymer, carboxymethyl cellulose, polyethylene, polypropylene, and polycarbonates; and compounds such as silane coupling agents. Preferred examples of the polymer include polyimide, polystyrene, polymers of styrene derivative, gelatin, polyvinyl alcohol and alkyl-modified polyvinyl alcohol having at least one alkyl group (preferably an alkyl group having carbon atoms of 6 or more).

For formation of an aligned layer, a polymer may preferably used. The types of the polymer, which can be used for forming the aligned layer, may be decided depending on the types of alignment of the liquid-crystalline compound (in particular, the average tilt angle). For example, for forming an aligned layer capable of aligning liquid-crystalline compounds horizontally, a polymer which does not lower the surface energy of the aligned layer (a usual polymer for forming aligned layer) is used. Specifically, kinds of such a polymer are described in various documents concerning liquid crystal cells or optical compensation sheets. For example, polyvinyl alcohols, modified polyvinyl alcohols, copolymers with polyacrylic acid or polyacrylate, polyvinyl pyrrolidone, cellulose and modified cellulose are preferably used. When the aligned layer is used as a protective layer, materials for the aligned layer may have a functional group capable of reacting with the reactive group of the liquid-crystalline compound. Such a reactive group can be introduced into the liquid-crystalline compound as a repeating unit having a reactive group in the side chain or as a substituent of a cyclic moiety. It is more preferable to use an aligned layer capable of forming a chemical bond with the liquid-crystalline compound at the interface, and a particularly preferable example of such an aligned layer is a modified polyvinyl alcohol, described in JP-A-9-152509, which has an acrylic group introduced in the side chain thereof using acid chloride or Karenz MOI (trade name, manufactured by Showa Denko K. K.). When such an aligned layer is used, the interface adhesion between the patterned optically anisotropic layer and the aligned layer is strengthened so that the patterned optically anisotropic layer can be transferred together with the aligned layer. The thickness of the aligned layer is preferably 0.01 to 5 µm, and more preferably 0.05 to 2 µm.

Polyimide film which has been widely used as an aligned layer for LCD (preferably a fluorine-atom-containing polyimide) is also preferable as the organic aligned layer. The film may be formed by applying polyamic acid, provided, for example, as LQ/LX series products by Hitachi Chemical Co., Ltd or as SE series products by NISSAN CHEMICAL INDUSTRIES, LTD, to a surface of the support, baking at 100 to 300°C for 0.5 to one hour to form a polymer layer, and rubbing a surface of the polymer layer.

The rubbing treatment may be carried out with known techniques which have been employed in the usual step for aligning of liquid crystal of LCD. More specifically, the rubbing treatment may be carried out by rubbing a surface of the aligned layer in a given direction, with paper, gauze, felt, rubber, nylon or polyester fiber or the like. The rubbing treatment is generally carried out, for example, by rubbing for several times with a cloth having the same length and the same diameter fibers grafted uniformly.

Examples of a deposition material used in inorganic oblique-vapor-deposited film include metal oxides such as SiO₂, which is a typical material, TiO₂ and ZnO; fluorides such as MgF₂; metals such as Au and Al. Any high-dielectric metal oxides can be used as the oblique-vapor deposition material, and, thus, the examples thereof are not limited to the above mentioned materials. The inorganic oblique-vapor-deposited film may be produced with a deposition apparatus. The inorganic oblique-vapor-deposited film may be formed by depositing on an immobile film (a support) or on a long film fed continuously.

### [Support which serves as an Aligned Layer]

In order to align the liquid crystal layer, a method of forming an aligned layer onto the support and subjecting the surface of the aligned layer to a rubbing treatment is common. However, depending on the combination of a coating liquid and a support, it is also possible to align the liquid crystal layer by directly rubbing the support. Examples of such a support include a support having an organic compound, particularly a polymer preferably used for the aligned layer that is described below as its major component. Examples of such a support include PET film, etc.

### [Two or More Optically Anisotropic Layers]

The birefringent pattern builder may have two or more optically anisotropic layers. The two or more optically anisotropic layers may be adjacent to each other in direction of the normal line, or may sandwich another functional layer such as an aligned layer or adhesive layer. The two or more optically anisotropic layers may have almost the same retardation to each other, or different retardation from each other. The slow axes of them may be in the same direction to each other, or different direction from each other.

### [Method of Producing Birefringent Pattern Builder]

The method of producing the birefringent pattern builder is not particularly limited. For example, the birefringent pattern builder may be produced by: directly forming an optically anisotropic layer on a temporary support; transferring an optically anisotropic layer on a temporary support by using another birefringent pattern builder used as a transferring material. In view of a reduced number of processes, the optically anisotropic layer is more preferably formed directly on the temporary support.

Examples of the methods for producing the birefringent pattern builder having two or more optically anisotropic layers include a method of forming optically anisotropic layers directly on a birefringent pattern builder or forming optically anisotropic layers on a birefringent pattern builder with an aligned layer interposed therebetween, and a method of transferring optically anisotropic layers onto a birefringent pattern builder from another birefringent pattern builder used as a transfer material. In order to independently control the retardations to be imparted to the respective optically anisotropic layers, it is more preferred that a first patterned optically anisotropic layer be provided, and then a second patterned optically anisotropic layer formed independently from the first layer be transferred onto the first layer.

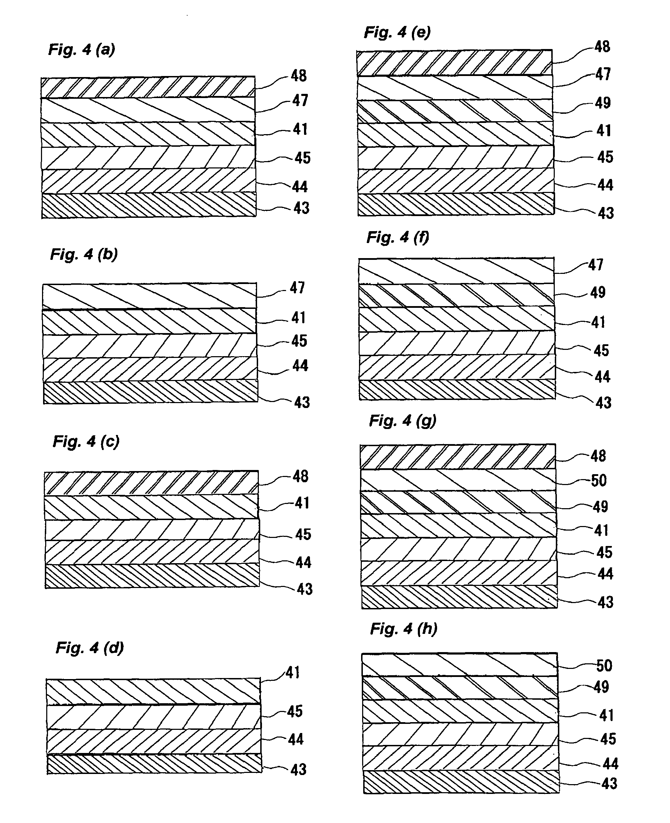

Figs. 4(a) to 4(h) are cross-sectional views schematically showing examples of the layered structure of the forgery-preventing transfer foil of the invention. A patterned optically anisotropic layer 41 and optionally various functional layers (a release layer 44, a protective layer 45, a reflective layer 47, an adhesive layer 48, a hologram layer 49, a transparent reflective layer 50) are laminated on a temporary support 43. Figs. 4(a), 4(b), 4(e), and 4(f) show examples of the forgery-preventing transfer foil, whose birefringent pattern is suitable to be viewed by reflection. Figs. 4(c), 4(d), 4(g), and 4(h) show examples of the transparent forgery-preventing transfer foil, which are suitable for use in cases where they are attached to reflective items so that their birefringent pattern can be viewed by reflection or where their birefringent pattern is viewed by transmitted light. In the latter case, the forgery-preventing foil of the invention may be placed between two polarizing plates, and the transmission image may be viewed. Two polarizing plates are generally arranged in the crossed-Nicol relationship, and the optical axis of the forgery-preventing foil is generally placed to be shifted by 45 degrees from the optical axis of the polarizing plates. However, such an arrangement is not critical when two or more patterned optically anisotropic layers are laminated. Figs. 4(e) to 4(h) show examples of the forgery-preventing foil having a hologram layer 49. In order to make hologram reproduction difficult, it is more preferred that the patterned optically anisotropic layer 41 be located above the hologram layer 49 after attached to the item. The reproduction of the hologram positioned in such a lower layer requires correction of measured light for every pixel of the patterned optically anisotropic layer, and therefore, the degree of difficulty in the reproduction is increased. The forgery-preventing transfer foil of the invention may include any functional layer other than those shown in Figs. 4(a) to 4(h). The release layer or the protective layer may be provided as needed.

### [Functional Layer to be laminated on Birefringence Pattern]

The functional layer having various functions may be laminated on the birefringence pattern. Examples of the functional layer include, but not specifically limited to, an adhesive layer, a hologram layer, a reflective layer and a protective layer as described below.

### [Adhesive Layer]

The forgery-preventing transfer foil preferably has an adhesive layer on usage. The adhesive layer may be of any type, as long as it has sufficient adhesion. Examples of the adhesive layer include a photosensitive resin layer, an adhesive layer of an adhesive agent, a pressure-sensitive resin layer, a heat-sensitive resin layer, a photosensitive resin layer, and the like. The heat-sensitive resin layer is preferred. When used for a transparent transfer foil with no reflective layer, the adhesive layer is preferably transparent and colorless.

The adhesive agent for the adhesive layer is preferred to exhibit, for example, suitable wettability, cohesiveness and adhesiveness. Specific examples are adhesive agents prepared using a suitable base polymer such as an acrylic-based polymer, silicone-based polymer, polyester, polyurethane, polyether, or synthetic rubber. The adhesive characteristics of the adhesive layer can be suitably controlled by conventionally known methods. These include adjusting the composition and/or molecular weight of the base polymer forming the adhesive layer, and adjusting the degree of crosslinking and/or the molecular weight thereof by means of the crosslinking method, the ratio of incorporation of crosslinking functional groups, and the crosslinking agent blending ratio.

The photosensitive resin layer may be formed of a photosensitive resin composition, and commercial material may also be used. When used as an adhesive layer, the photosensitive resin layer is preferably formed of a resin composition comprising at least a polymer, a monomer or oligomer, and the photopolymerization initiator or photopolymerization initiator systems. With regard to the polymer, monomer or oligomer, and the photo-polymerization initiator or photo-polymerization initiator systems, the description in paragraph Nos. [0082] to [0085] of JP-A-2007-121986 can be referred to.

The photo-sensitive resin layer preferably includes appropriate surfactant from the view point of effectively preventing unevenness. With regard to the surfactant, the description in [0095] to [0105] of JP-A-2007-121986 can be referred to.

The pressure-sensitive resin layer is not specifically limited as far as it exhibits adhesiveness when pressure is applied. Various adhesives, such as rubber adhesives, acrylic adhesives, vinyl ethers-based adhesives and silicone-based adhesives, can be employed as the pressure-sensitive adhesive. The adhesives may be employed in the manufacturing and coating stages in the form of solvent adhesives, non-water-based emulsion adhesives, water-based emulsion adhesives, water-soluble adhesives, hot-melt adhesives, liquid hardening type adhesives, delayed tack adhesives, and the like. Rubber adhesives are described in Shin Kobunshi Bunko 13 (the New Polymer Library 13), "Nenchaku Gijutu (Adhesion Techniques)," Kobunshi Kankokai (K. K.), p. 41 (1987). Examples of the vinyl ether-based adhesives include vinyl ether comprised mainly of alkyl vinyl ether compounds having 2 to 4 carbon atoms, and vinyl chloride/vinyl acetate copolymers, vinyl acetate polymers, polyvinyl butyrals, and the like, to which a plasticizer is admixed. With respect to the silicone-based adhesives, there can be used adhesives in which rubber-like siloxane is used to impart film formation and coagulation power of the film, and resinous siloxane is used to impart tackiness or adhesiveness.

The heat-sensitive resin layer is not specifically limited as far as it exhibits adhesiveness when heat is applied. Examples of the heat-sensitive adhesives include hot-melt compounds and thermoplastic resins. Examples of the hot-melt compounds include low molecular weight compounds in the form of thermoplastic resins such as polystyrene resin, acrylic resin, styrene-acrylic resin, polyester resin, and polyurethane resin; and various waxes in the form of vegetable waxes such as carnauba wax, Japan wax, candelilla wax, rice wax, and auricury wax; animal waxes such as beeswax, insect waxes, shellac, and whale wax; petroleum waxes such as paraffin wax, microcrystalline wax, polyethylene wax, Fischer-Tropsch wax, ester wax, and oxidized waxes; and mineral waxes such as montan wax, ozokerite, and ceresin wax. Further examples include rosin, hydrogenated rosin, polymerized rosin, rosin-modified glycerin, rosin-modified maleic acid resin, rosin-modified polyester resin, rosin-modified phenol resin, ester rubber, and other rosin derivatives; as well as phenol resin, terpene resin, ketone resin, cyclopentadiene resin, aromatic hydrocarbon resin, aliphatic hydrocarbon resin, and alicyclic hydrocarbon resin.

These hot-melt compounds preferably have a molecular weight of, usually 10,000 or less, particularly 5,000 or less, and a melting or softening point desirably falling within a range of 50°C to 150°C. These hot-melt compounds may be used singly or in combinations of two or more. Examples of the above-mentioned thermoplastic resin include ethylene series copolymers, polyamide resins, polyester resins, polyurethane resins, polyolefin series resins, acrylic resins, and cellulose series resins. Among these, the ethylene series copolymers are preferably used.

### [Hologram Layer]

The forgery-preventing (transfer) foil of the invention may have a hologram layer. Holograms are used alone for forgery-preventing labels. The combination of a hologram and a birefringent pattern to form a latent image provides improved forgery-preventing performance.

The kind of the hologram is not particularly limited, and either a relief hologram or a volume hologram is appropriate. Although the former is superior in productivity, the latter is superior in the property for preventing forgery.

With regard to the various kinds of the hologram material, "Holography Material / Application Manual" (Junpei Tsujiuchi supervision, 2007) can be referred to. In addition, with regard to the formation of the relief hologram layer, description in JP-A-2004-177636 and JP-A-2005-91786 can be referred to. Among those, typical methods are explained below.

Regarding hologram resins to be used as materials for the formation of the hologram layer, any one of the thermoplastic resin, thermosetting resin, ultraviolet ray curable resin or electron beam curable resin which is moldable with pressing plate respectively can be used. There can be used thermoplastic resins such as acrylic resin, epoxy-based resin, cellulose-based resin, vinyl resin; thermosetting resins such as urethane resin prepared by adding polyisocyanate as a crosslinking agent to acrylic polyol, polyesterpolyol or so each having reactive hydroxy group and crosslinking; melamine-based resin, phenol-based resin; ultraviolet ray curable resins or electron beam curable resins such as epoxy(meth)acrylate, urethane(meth)acrylate. These can be used singly or in combination.

### [Forming of Hologram Layer]

Methods for producing the hologram layer include (1) a method including applying a UV-curable resin or an electron beam-curable resin to a support, feeding the coating between a printing cylinder and an impression cylinder, and curing the coating by ultraviolet or electron beam irradiation; (2) a method as disclosed in JP-A-5-232853 including press-bonding a ultraviolet- or electron beam-curable resin composition to the textured surface of a ready-made hologram film, curing the resin by ultraviolet or electron beam irradiation, and then peeling off the hologram film so that the hologram image is transferred; and (3) a method including extruding a molten synthetic resin from an extrusion die on one surface of a support and laminating the resin between an impression cylinder and a printing cylinder comprising a cooling roll equipped with a stamper having a relief hologram formed on its surface. Any of these methods may be preferably used.

When the surface of the resin layer is finely textured by embossing and when the hologram layer is provided with a reflective layer as described later, the embossing process may be performed before or after the reflective layer is formed.

The hologram layer is preferably formed on the birefringent pattern produced as described above. Alternatively, a commercially-available hologram foil may be transferred onto the patterned optically anisotropic layer.

### [Reflective Layer]

When the birefringent pattern is viewed by reflection and when the foil is attached to non-reflective items, a reflective layer is preferably provided to improve the visibility of the birefringent pattern.

The reflective layer to be used may be a reflective metal thin film or a layer containing reflective metal particles.

Regarding the metal used for the metal thin film, Al, Cr, Ni, Ag, Au or so can be preferably used. The metal thin film may be formed by vacuum deposition. The metal thin film may be either monolayer film or multilayer film. The metal thin film can be produced in accordance with, for example, any one of a physical vapor deposition method and a chemical vapor deposition method.

The layer containing reflective metal particles may be a layer printed with ink of gold, silver or the like.

The reflective layer does not necessarily have a complete mirror surface, and the surface may be matted.

In the case of the transparent forgery-preventing transfer foil, the reflective layer described above is not necessary. When the hologram layer is provided, however, a transparent reflective layer having a refractive index different from that of the hologram is preferably placed adjacent to the hologram layer so that the visibility of the hologram can be increased.

The thin film prepared by using a material having a large refractive index difference from the hologram-layer-forming resin is preferable as the transparent reflective layer. Examples of the material having large refractive index include titanium oxide, zirconium oxide, zinc sulfide, indium oxide and so on. On the contrary, examples of the material having small refractive index include silicon dioxide, magnesium fluoride, calcium fluoride, aluminum fluoride and so on.

Although the film thickness of a metal thin film, a refractive layer such as a transparent refractive layer is different depending on the material to be used, it can be arbitrarily selected within the range of, for example, from 5 nm to 400 nm, preferably from 10 nm to 100 nm.

### [Protective Layer]

When attached to an item, the protective layer forms the uppermost layer. The protective layer protects the patterned optically anisotropic layer from fouling or damage during storage. In the transfer foil, the protective layer may be placed on the temporary support or the release layer. In addition, the bonding strength between the temporary support and the protective layer or between the protective layer and the layer placed directly thereon may be controlled so that the function of facilitating the peeling-off between the temporary support and the transfer layers can be provided when the transfer layers are transferred to the item. Alternatively, the aligned layer may also function as the protective layer.

Examples of the suitable materials for the protective layer include polyolefins, fluoropolymers such as polytetrafluoroethylene, and polyfunctional acrylates.

### [Forming Method of Layer]

The individual layers of the optically anisotropic layer, photosensitive resin layer, adhesive layer, adhesive layer, and optionally-formed aligned layer, and thermoplastic resin layer can be formed by coating such as dip coating, air knife coating, spin coating, slit coating, curtain coating, roller coating, wire bar coating, gravure coating and extrusion coating (U.S. Patent No. 2,681,294). Two or more layers may be coated simultaneously. Methods of simultaneous coating are described in U. S. Patent Nos. 2,761,791, 2,941,898, 3,508,947, 3,526,528, and in "Kotingu Kogaku (Coating Engineering)", written by Yuji Harazaki, p. 253, published by Asakura Shoten (1973).

When the layer above the optically anisotropic layer is applied to the optically anisotropic layer, the coating liquid may be added with a plasticizer or a photopolymerization initiator. Thereby, the modification of the optically anisotropic layer may be conducted simultaneously by immersion of these additives.

### [Birefringent Pattern Builder or Method for Transferring Patterned Optically Anisotropic Layer to Temporary Support]

From the viewpoint of the number of processes, the birefringent pattern builder or the patterned optically anisotropic layer is preferably formed on the temporary support. Alternatively, the birefringent pattern builder or the patterned optically anisotropic layer may be formed on a different support and then transferred to the temporary support. In order to laminate a plurality of patterned optically anisotropic layers each having an independently controlled retardation, the patterned optically anisotropic layers other than the first one are preferably provided by transfer. Any transfer method capable of transferring the birefringent pattern builder or the patterned optically anisotropic layer to the temporary support may be used. An exemplary method may include forming the birefringent pattern builder or the patterned optically anisotropic layer on a different support, forming an adhesive layer thereon, and then bonding the adhesive layer side to the temporary support by press-bonding or thermal press-bonding with a heating and/or pressing roller or plate in a laminator. Alternatively, the birefringent pattern builder or the patterned optically anisotropic layer may be formed on a different support and then bonded by the same method to an adhesive layer formed on the uppermost surface of the temporary support.

### [Steps Included in Transfer]

After the birefringent pattern builder or the patterned optically anisotropic layer formed on a different support is transferred onto the temporary support, the different support is peeled off. This may be followed by the step of removing the unnecessary layer transferred together with the birefringent pattern builder or the patterned optically anisotropic layer. For example, when polyvinyl alcohol/polyvinylpyrrolidone copolymer is used in the aligned layer, the aligned layer and the layers above can be removed by development with an aqueous weak alkaline developing solution. Methods of the development may be any of known methods such as paddle development, shower development, shower-and-spin development and dipping development. The temperature of the developing solution is preferably 20°C to 40°C, and pH of the developing solution is preferably 8 to 13.

After transferring the birefringent pattern builder, other layer may be formed on the surface remained after the peeling-off of the temporary support or the removal of the unwanted layers, according to need. A different birefringent pattern builder may be transferred on the surface remained after the peeling-off of the temporary support or the removal of the unwanted layers, according to need. The birefringent pattern builder may be the same as or different from the previously transferred birefringent pattern builder. Further, the direction of the slow axis of the optically anisotropic layer in the first transferred birefringent pattern builder may be the same as or different from that of the slow axis of the optically anisotropic layer in the second transferred birefringent pattern builder. As described above, transferring plural optically anisotropic layers is useful for production of a birefringence pattern having large retardation with plural optically anisotropic layers stacked so that the directions of the slow axes are the same, and a specific birefringence pattern with plural optically anisotropic layers stacked so that the directions of the slow axes are different from each other.

### [Production of Birefringent Pattern]

By conducting the method including a step of using the birefringent pattern builder to conduct a pattern-like heat treatment or irradiation of ionizing radiation and a step of causing the remaining unreacted reactive group in the optically anisotropic layer to react or deactivate in this order, a patterned birefringent product can be produced. In particular, when the optically anisotropic layer has a retardation disappearance temperature and the retardation disappearance temperature increases by irradiation of ionizing radiation (or the heat treatment at a temperature equal to or lower than the retardation disappearance temperature), a patterned birefringent product can be produced easily.

The pattern-like irradiation of ionizing radiation may be, for example, exposure to light (patterned light exposure). The step of causing a remaining unreacted reactive group in the optically anisotropic layer to react or deactivate may be an overall exposure or an overall heat treatment (baking). To save cost, heating at a temperature higher than the retardation disappearance temperature of the unexposed region and lower than the retardation disappearance temperature of the exposed region can preferably serve directly a heat treatment for reaction.

The pattern-like heat treatment also may be conducted by another method as described below. In this method, a region is firstly heated at a temperature close to the retardation disappearance temperature to reduce or disappear the retardation. Thereafter, the step of causing a remaining unreacted reactive group in the optically anisotropic layer to react or deactivate (overall exposure or overall heating) at a temperature lower than the retardation disappearance temperature to thereby obtain a birefringent pattern. In this case, a pattern can be obtained in which the retardation of only the firstly-heated region is lost.

### [Timing of Pattern Formation]

In the production of the birefringent pattern of the present invention, the pattern-like heat treatment or irradiation of ionizing radiation may be conducted at any of the step of conducting heat treatment or irradiation of ionizing radiation. Specifically, for example, in the production of the birefringent pattern containing at least the following steps in this order:
coating and drying a solution containing a liquid-crystalline compound;
causing one kind of the reactive groups to react by applying heat or irradiating ionizing radiation; and
conducting heat treatment or irradiation of ionizing radiation again to react reactive groups including reactive groups different from the one reacted in the above step,
the step of causing one kind of the reactive groups to react by applying heat or irradiating ionizing radiation may be conducted in a patterned manner, the step of conducting heat treatment or irradiation of ionizing radiation again to react reactive groups including reactive groups different from the one reacted in the above step may be conducted in a patterned manner, or both of the steps also may be conducted in a patterned manner.

### [Patterned Light Exposure]

The patterned light exposure for producing a birefringent pattern may be conducted so that a region in the birefringent pattern builder in which birefringence properties are desired to be left is exposed. An optically anisotropic layer in the exposed region has an increased retardation disappearance temperature. The method of patterned light exposure may be a contact light exposure using a mask, proximity light exposure, projected light exposure, or direct drawing by focusing on the predetermined point by using laser or electron beam without a mask. The irradiation wavelength of the light source for the light exposure preferably has a peak in the range of 250 to 450 nm, and more preferably in the range of 300 to 410 nm. When a photosensitive resin layer is used to form steps (unevenness) at the same time, it is also preferred that light in a wavelength region at which the resin layer can be cured (e.g., 365 nm, 405 nm) is irradiated to the resin layer. Specific examples of the light source include extra-high voltage mercury lamp, high voltage mercury lamp, metal halide lamp, and blue laser. Exposure amount generally falls in the range preferably from about 3 mJ/cm² to about 2,000 mJ/cm², more preferably from about 5 mJ/cm² to about 1,000 mJ/cm², further preferably from about 10 mJ/cm² to about 500 mJ/cm², and most preferably from about 10 mJ/cm² to about 100 mJ/cm².

In a case where the birefringence property should be controlled pixel by pixel, it is appropriate to control the exposure amount to be irradiated pixel by pixel. In the light exposure using a mask, a plurality of the light exposure with each different exposure amount using a mask with each different pattern may be suitable, or controlling the exposure amount using a density mask may be also suitable. From the viewpoint of productivity, the latter is preferable.

Another birefringence pattern builder is transferred on the laminated structure obtained by conducting patterned light exposure to one birefringence pattern builder, and then another patterned light exposure may be conducted. In this case, the retardation values retained after baking can be effectively changed among the region (A) which is a region unexposed to light both in the first and second exposures (generally having the lowest retardation value), the region (B) which is a region exposed to light in the first exposure but a region unexposed to light in the second exposure, the region (C) which is a region unexposed to light in the first exposure but a region exposed to light in the second exposure, and the region (D) which is a region exposed to light both in the first and second exposures (generally having the highest retardation value).

### [Overall Heat Treatment (Baking)]

Birefringence pattern can be produced by applying heat to the birefringence pattern builder after patterned light exposure at 50 to 400°C, preferably 80 to 400°C. When the retardation disappearance temperature of the optically anisotropic layer in the birefringence pattern builder used for forming birefringence pattern before the light exposure is referred to as T1 (°C), and the retardation disappearance temperature after the light exposure as T2 (°C), (provided that when the retardation disappearance temperature is not in the range of the temperature of 250°C or lower, T2=250), the temperature of baking is preferably T1 °C or higher and T2°C or lower, more preferably (T1+10)°C or higher and (T2-5)°C or lower, and most preferably (T1+20)°C or higher and (T2-10)°C or lower.

By baking, the retardation in the region unexposed to light in the birefringence pattern builder lowers, whereas the retardation in the region exposed to light, in which retardation disappearance temperature has risen by the previous patterned light exposure, lowers only slightly, absolutely does not lower, or rises. As a result, the retardation in the region unexposed to light is smaller than that in the region exposed to light, enabling production of birefringence pattern (a patterned optically anisotropic layer).

Alternatively, another birefringence pattern builder may be transferred on the birefringence pattern builder which has been baked, and then a patterned light exposure and baking may be conducted thereon. This method is useful for independently controlling the retardations imparted to the optically anisotropic layers, respectively.

### [Pattern-like Heat Treatment (Writing of Heat Pattern)]

The heating temperature of pattern-like heat treatment is not limited and may be any temperature so long as the temperature causes a heated part and a non-heated part to have different retardations. When a heated part desirably has retardation of substantially 0 nm in particular, it is preferred to conduct the heating at a temperature equal to or higher than the retardation disappearance temperature of the optically anisotropic layer of the birefringent pattern builder used. On the other hand, the heating temperature is preferably lower than a temperature at which the optically anisotropic layer is burned or colored. The heating may be generally performed at a temperature in a range from about 120°C to about 260°C, more preferably in a range from 150°C to 250°C, and further preferably in a range from 180°C to 230°C.

Although the method of heating a part (region) of a birefringent pattern builder is not particularly limited, such methods may be used including a method of causing a heating body to have a contact with a birefringent pattern builder, a method of providing or placing a heating body in the close vicinity of a birefringent pattern builder, and a method of using a heat mode exposure to partially heat a birefringent pattern builder.

### [Reaction Processing by Overall Heat Treatment (Baking) at Temperature Equal to or Lower than Retardation Disappearance Temperature or Overall Exposure]

A region that is not subjected to a heat treatment, in an optically anisotropic layer subjected to the pattern-like heat treatment, still includes an unreacted reactive group while retaining the retardation, and thus is still in an unstable status. In order to react or deactivate the unreacted reactive group remaining in the not-treated region, a reaction processing by an overall heat treatment or an overall exposure is preferably conducted.

The reaction processing by an overall heat treatment is conducted preferably at a temperature which is lower than the retardation disappearance temperature of an optically anisotropic layer of the birefringent pattern builder used and also efficiently promotes the reaction or deactivation of the unreacted reactive group. Generally, heating at about 120 to 180°C may be conducted, 130 to 170°C is more preferred, and 140 to 160°C is further preferred. However, a suitable temperature changes depending on required birefringence properties (retardation) or the thermosetting reactivity of an optically anisotropic layer used. The time of the heat treatment is not particularly limited. The time of the heat treatment is preferably 30 seconds or more and 5 hours or less, the time of 1 minute or more and 2 hours or less is more preferred, and the time of 2 minutes or more and 1 hour or less is particularly preferred.

The reaction processing also can be conducted by an overall exposure instead of the overall heat treatment. In this case, the irradiation wavelength of a light source preferably has a peak in a range from 250 to 450 nm and more preferably in a range from 300 to 410 nm. When the photo-sensitive resin layer is used to form steps at the same time, irradiation of light having a wavelength region at which the resin layer can be cured (e.g., 365 nm, 405 nm) is also preferred. Specific examples of the light source include extra-high-pressure mercury lamp, high-pressure mercury lamp, metal halide lamp, and blue laser. Exposure amount generally falls in the range preferably from about 3 mJ/cm² to about 2,000 mJ/cm², more preferably from about 5 mJ/cm² to about 1,000 mJ/cm², further preferably from about 10 mJ/cm² to about 500 mJ/cm², and most preferably from about 10 mJ/cm² to about 300 mJ/cm².

### [Finishing Heat Treatment]

When the birefringent pattern produced by the steps according to the preceding sections is desired to have a further-improved stability, a finishing heat treatment also may be performed for the purpose of further reacting unreacted reactive groups still remaining after the fixing to increase the durability, and for the purpose of evaporating or burning an unnecessary component in the material to remove such a component. In particular, the finishing heat treatment is effective when a birefringent pattern is produced by a patterned light exposure and an overall heating or by a pattern-like heat treatment and an overall exposure. The finishing heat treatment may be performed at a temperature from about 180 to about 300°C, more preferably from 190 to 260°C, and further preferably from 200 to 240°C. The time of the heat treatment is not particularly limited. However, the time of the heat treatment is preferably 30 seconds or more and 5 hours or less, more preferably 1 minute or more and 2 hours or less, and particularly preferably 2 minutes or more and 1 hour or less.

### [Birefringence Pattern]

The birefringence pattern obtained by conducting light exposure and baking as above to the birefringence pattern builder is normally colorless and transparent, but when it is sandwiched by two polarizing plates, or by one polarizing plate and one reflective layer, the product exhibits characteristic contrast or color, and becomes readily identifiable with the naked eye. That is, the patterned birefringent product is normally almost invisible with the naked eye, whereas, through a polarizing plate, the patterned birefringent product can exhibit multi-colored image which can be readily identified. A copy of the birefringence pattern without any polarizing plate exhibits no image, whereas a copy through a polarizing plate exhibits a permanent pattern which is visible with the naked eye without any polarizing plate. Therefore, the reproduction of the birefringence pattern is difficult. Such kind of method of producing birefringence pattern is not widely spread, and needs unusual or special kind of material. Therefore, the patterned birefringent product can be considered to be favorably adapted as means of preventing forgery.

In the present invention, the pattern visible through a polarizing plate preferably has three or more colors in view of forgery-preventing performance and the like, while it is not particularly limited. The pattern having three or more colors may be formed by the above heat treatment or pattern exposure and the like to control the retardation at three or more levels.

### [Forgery-preventing (Transfer) Foil]

The forgery-preventing (transfer) foil of the invention may be used by attaching to forgery-preventing labels, commercial-product packages such as package paper, various ID cards.

The foil of the invention may also be used in the form of a paper label or a film label, after it is subjected to lamination, foil stamping or the like onto any support. After a pressure-sensitive adhesive layer and a release layer are provided, the foil of the invention may be punched out into a predetermined shape, so that it can also be used in the form of a sticker or a label.

Since the forgery-preventing foil of the invention has a thickness of 20 µm or less, preferably 10 µm or less, it is extremely difficult to peel off only the forgery-preventing foil itself. In addition, the self-supporting capability of the forgery-preventing (transfer) foil of the invention is extremely low, because of its small thickness. Therefore, the foil alone peeled off from the temporary support is highly brittle or ductile so that the latent image can be changed by damage or deformation, which makes it impossible to deal with the foil in the same manner as before the peeling-off, so that tampering, replacement and the like can be easily detected.

The forgery-preventing (transfer) foil described above may be attached to items such as various certificates, identifications and securities, when used. The forgery-preventing (transfer) foil is also suitable for protection of brand names, when used in packages of commercial products such as high-class brand products, cosmetics, pharmaceuticals, and tobaccos.

The present invention provides forgery-preventing means that utilizes a non-peelable latent image, that makes it difficult to find the existence of forgery-preventing means at ordinary times but has a latent image that can be allowed to manifest in a well identifiable manner at the time of identification, and that has a high forgery-preventing effect and a low production load.

The forgery-preventing foil and the forgery-preventing transfer foil of the present invention enable a good latent image to manifest and have significant advantages such as a high ability to distinguish the authentic products from fake ones, a high forgery-preventing effect and a low production load. The forgery-preventing foil of the present invention is also highly effective in preventing forgery, because the peeling-off and reuse of it are extremely difficult.

The present invention will be described in more detail based on the following examples. Any materials, reagents, amount and ratio of use and operations, as shown in the examples, may appropriately be modified without departing from the spirit and scope of the present invention. It is therefore understood that the present invention is by no means intended to be limited to the specific examples below.

### EXAMPLES

### [Preparation of Forgery-Preventing Transfer Foil]

### (Preparation of Coating Liquid AL-1 for Aligned Layer)

The composition below was prepared, filtered through a polypropylene filter having a pore size of 30 µm, and the filtrate was used as coating liquid AL-1 for forming an aligned layer.

| Composition of Coating Liquid for Aligned layer (mass%) | |
|---|---|
| Polyvinyl alcohol (trade name: PVA205, manufactured by Kuraray Co., Ltd.) | 3.21 |
| Polyvinylpyrrolidone (trade name: Luvitec K30, manufactured by BASF) | 1.48 |
| Distilled water | 52.10 |
| Methanol | 43.21 |

### (Preparation of Coating Liquid LC-1 for Optically Anisotropic Layer)

The composition below was prepared, filtered through a polypropylene filter having a pore size of 0.2 µm, and the filtrate was used as coating liquid LC-1 for forming an optically anisotropic layer.

LC-1-1 is a liquid-crystalline compound having two reactive groups, one of which is acrylic group, i.e., a radically reactive group, and the other of which is oxetanyl group, i.e., a cationically reactive group.

LC-1-2 is a disk-shaped compound added for the purpose of alignment control. LC-1-2 was synthesized according to the method described in Tetrahedron Lett., Vol. 43, p. 6793 (2002).

| Composition of Coating Liquid for Optically Anisotropic Layer (mass%) | |
|---|---|
| Rod-like liquid crystalline compound (LC-1-1) | 32.59 |
| Horizontal alignment agent (LC-1-2) | 0.02 |
| Cationic photopolymerization initiator (trade name: CPI100-P, manufactured by SAN-APRO Ltd.) | 0.66 |
| Polymerization control agent (trade name: IRGANOX1076, manufactured by Ciba Speciality Chemicals Corporation) | 0.07 |
| Methyl ethyl ketone | 66.66 |

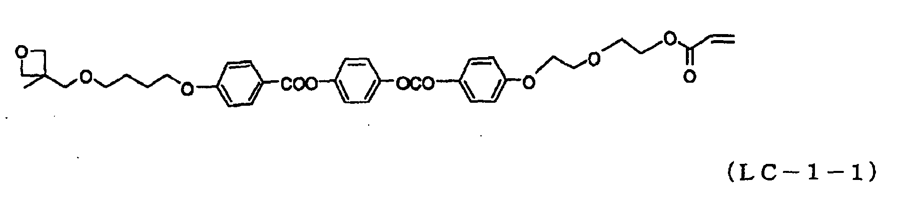

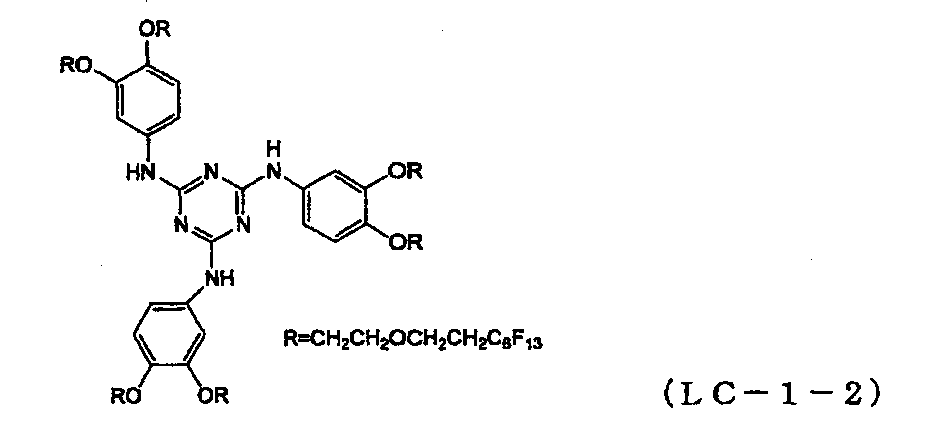

### (Preparation of Coating Liquid AD-1 for Adhesive Layer for Transfer)

The composition below was prepared, filtered through a polypropylene filter having a pore size of 0.2 µm, and the filtrate was used as coating liquid AD-1 for forming an adhesive layer for transfer.

| Composition of Coating Liquid for Adhesive Layer for Transfer (mass%) | |
|---|---|
| Random copolymer of benzyl methacrylate/methacrylic acid/methyl methacrylate (copolymerization ratio (molar ratio) = 35.9/22.4/41.7, weight-average molecular weight = 38,000) | 8.05 |
| KAYARAD DPHA (trade name, manufactured by Nippon Kayaku) | 4.83 |
| Radical polymerization initiator (2-trichloromethyl-5-(p-styrylstyryl)-1,3,4-oxadiazole) | 0.12 |
| Hydroquinone monomethyl ether | 0.002 |
| Megafac F-176PF (trade name, manufactured by Dainippon Ink & Chemicals Incorporation) | 0.05 |
| Propylene glycol monomethyl ether acetate | 34.80 |
| Methyl ethyl ketone | 50.538 |
| Methanol | 1.61 |

### (Preparation of Forgery-preventing Transfer Foil FP-1)

To the surface of a temporary support formed of a 25-µm-thick polyethylene terephthalate film (Lumirror L-25T60 (trade name), manufactured by Toray Industries, Inc.), the coating liquid for an aligned layer, AL-1, was applied by using a wire bar and dried. An aligned layer was then formed by rubbing in the MD direction, and coating liquid LC-1 for optically anisotropic layer was applied thereto with a wire bar. The coating was dried at a coating surface temperature of 105°C for 2 minutes to form a liquid-crystalline phase. The coated layer was then irradiated in the air atmosphere by ultraviolet radiation by using a 160 mW/cm², air-cooled metal halide lamp (product of Eye Graphics Co., Ltd.), so as to fix the alignment state of the phase to thereby obtain a 3.5-µm-thick optically anisotropic layer. The ultraviolet ray used was 100 mW/cm² illuminance in the range of UV-A (integrated value in the wavelength between 320 nm and 400 nm), and 80 mJ/cm² irradiation energy in the range of UV-A. The optically anisotropic layer was a solid polymer at 20°C and exhibited MEK (methyl ethyl ketone) resistance.

Coating liquid AD-1 for adhesive layer was then applied to the optically anisotropic layer and dried to form a 1.1 µm-thick adhesive layer.

Using M-3L mask aligner manufactured by MIKASA CO., LTD. and photomask I, the film was exposed to light at an intensity of 6.25 mW/cm² for 8.2 seconds. The photomask I had four regions I-A, I-B, I-C, and I-D. The region I-A has a shape of the right and left inversion image of character A, the region I-B has a shape of the right and left inversion image of character B, and the region I-C has a shape of the right and left inversion image of character C. The region I-D is light-shielded in the part except it. Transmittances with respect to ultraviolet radiation of λ= 365 nm in each region (each region of photomask I) are shown in Table 1.

**Table 1**

| Region | Transmittance (%) |
|---|---|
| I-A | 20 |
| I-B | 33 |
| I-C | 96 |

Thereafter, baking was performed in a clean oven at 200°C for 10 minutes so that a forgery-preventing transfer foil FP-1 according to the invention was obtained. The thickness of the part of FP-1 other than the temporary support was 6.2 µm as measured with a laser microscope.

The retardations of the four regions I-A, I-B, I-C, and I-D of FP-1 were 143 nm, 202 nm, 297 nm, and 3 nm, respectively. The slow axes of these regions were substantially constant.

### (Preparation of Forgery-preventing Transfer Foil FP-2)

A 2 µm-thick hot melt-based adhesive was applied to FP-1 so that a forgery-preventing transfer foil FP-2 was obtained. The part of FP-2 other than the temporary support had a thickness of 8.2 µm.

### (Preparation of Forgery-preventing Transfer Foil FP-3)

Aluminum was vapor-deposited in a thickness of 60 nm on FP-1 so that a forgery-preventing transfer foil FP-3 was obtained. The part of FP-3 other than the temporary support had a thickness of 6.2 µm.

### (Preparation of Forgery-preventing Transfer Foil FP-4)

A 2 µm-thick hot melt-based adhesive was applied to FP-3 so that a forgery-preventing transfer foil FP-4 was obtained. The part of FP-4 other than the temporary support had a thickness of 8.2 µm.

### (Preparation of Forgery-preventing Transfer Foil FP-5)

FDFC 150 varnish (trade name, manufactured by TOYO INK MFG. CO., LTD.) was applied to FP-1. The coating had a dry thickness of 2 µm. The coating surface was then irradiated with ultraviolet light, while it was in contact with a relief hologram mold, so that a fine texture was formed on the surface. Zinc sulfide was vacuum-deposited in a thickness of 400 nm thereon, so that a forgery-preventing transfer foil FP-5 was obtained. The part of FP-5 other than the temporary support had a thickness of 8.2 µm.

### (Preparation of Forgery-preventing Transfer Foil FP-6)

A 2 µm-thick hot melt-based adhesive was applied to FP-5 so that a forgery-preventing transfer foil FP-6 was obtained. The part of FP-6 other than the temporary support had a thickness of 10.2 µm.

### (Preparation of Forgery-preventing Transfer Foil FP-7)

A forgery-preventing transfer foil FP-7 was prepared using the process of making FP-5, except that 60 µn-thick aluminum was vapor-deposited in place of zinc sulfide. The part of FP-7 other than the temporary support had a thickness of 8.2 µm.

### (Preparation of Forgery-preventing Transfer Foil FP-8)

A 2 µm-thick hot melt-based adhesive was applied to FP-7 so that a forgery-preventing transfer foil FP-8 was obtained. The part of FP-8 other than the temporary support had a thickness of 10.2 µm.

### (Use of Forgery-preventing Transfer Foils FP-1 to FP-8)

The forgery-preventing transfer foil FP-1 was press-bonded to an aluminum vapor-deposited paper sheet with an adhesive for dry lamination, and the PET film was peeled off. The resulting sheet was used to form a package. As a result, the package was ordinarily viewed as a silver package by visual observation, while a black character "A", a cyan character "B" and a yellow character "C" were visible through a polarizing plate.

The forgery-preventing transfer foil FP-1 was also press-bonded to a polypropylene film with an adhesive for dry lamination, and the PET film was peeled off. A reflective product was wrapped in the resulting film. As a result, the similar appearance to that of a general shrink film was obtained. However, the latent images were observed through a polarizing plate as mentioned above. Both are useful for distinguishing authentic products from fake ones, when used in product packages.

The forgery-preventing transfer foil FP-2 was hot stamped on a paper sheet with a silver ink print. There was no change in ordinary visual appearance before and after the hot stamping, while the latent images were visualized through a polarizing plate as mentioned above.

The forgery-preventing transfer foil FP-3 was press-bonded to a paperboard with an adhesive for dry lamination, and the PET film was peeled off. The resulting paperboard makes it possible to easily distinguish authentic products from fake ones, when used to form a product package.

The forgery-preventing transfer foil FP-4 was hot stamped on a plastic card. The resulting card makes it possible to easily detect its tampering and therefore is suitable for use in ID cards and the like.

FP-5, 6, 7, or 8 may be used in the similar manner to FP-1, 2, 3, or 4. FP-5 to FP-8 each have a hologram layer and therefore an enhanced forgery-preventing effect. The visible hologram layer provides a good design feature.

The forgery-preventing foils attached to products were attempted to be peeled off from the products, but all the foils were broken into pieces and unsuccessfully peeled off.

Having described our invention as related to the present embodiments, it is our intention that the invention not be limited by any of the details of the description, unless otherwise specified, but rather be construed broadly within its spirit and scope as set out in the accompanying claims.

This application claims priority on Patent Application No. 2008-287071 filed in Japan on November 07, 2008, which is entirely herein incorporated by reference.

## Claims

1. A forgery-preventing foil having a latent image and a total thickness of 20 µm or less, comprising at least one patterned optically anisotropic layer having two or more regions different in birefringence property, all of the regions in the same layer being formed of the same layer-forming composition.

2. The forgery-preventing foil according to Claim 1, wherein the patterned optically anisotropic layer is formed by polymerizing a reactive group-containing liquid-crystalline compound.

3. The forgery-preventing foil according to Claim 1 or 2, wherein slow axes in the same patterned optically anisotropic layer are substantially constant.

4. The forgery-preventing foil according to any one of Claims 1 to 3, further comprising an adhesive layer.

5. The forgery-preventing foil according to any one of Claims 1 to 4, further comprising a reflective layer.

6. The forgery-preventing foil according to any one of Claims 1 to 5, further comprising a protective layer.

7. The forgery-preventing foil according to any one of Claims 1 to 6, further comprising a hologram layer.

8. The forgery-preventing foil according to any one of Claims 1 to 7, wherein a birefringence property is so patterned that the latent image has three or more colors when manifested by observation in the normal direction of the optically anisotropic layer through a polarizing plate.

9. The forgery-preventing foil according to any one of Claims 1 to 8, wherein the latent image is visible through the polarizing plate.

10. A forgery-preventing transfer foil, comprising: a temporary support: and the forgery-preventing foil according to any one of Claims 1 to 9, which forgery-preventing foil is formed on the temporary support.

11. The forgery-preventing transfer foil according to Claim 10, further comprising a release layer on the temporary support.

12. A method for producing the forgery-preventing transfer foil according to Claim 10 or 11, comprising the sequential steps of:
applying a layer-forming composition containing a reactive group-containing liquid-crystalline compound directly to a temporary support or to a temporary support with any other layer interposed therebetween, to form an optically anisotropic layer;
heating the optically anisotropic layer in a pattern or irradiating the optically anisotropic layer with ionizing radiation in a pattern; and
curing the optically anisotropic layer entirely by ionizing radiation or heat treatment.

13. A forgery prevented product, comprising: a product; and the forgery-preventing transfer foil according to Claim 10 or 11, which forgery-preventing transfer foil is transferred to at least part of the product.
